(19) Europäisches Patentamt
European Patent Office
Office européen des brevets

(11) **EP 4 077 441 B1**

(12) **EUROPÄISCHE PATENTSCHRIFT**

(45) Veröffentlichungstag und Bekanntmachung des Hinweises auf die Patenterteilung:
**31.07.2024 Patentblatt 2024/31**

(21) Anmeldenummer: **20820195.4**

(22) Anmeldetag: **10.12.2020**

(51) Internationale Patentklassifikation (IPC):
**C08G 18/10** *(2006.01)* **C08G 18/32** *(2006.01)*
**C08G 18/73** *(2006.01)* **C08G 18/08** *(2006.01)*

(52) Gemeinsame Patentklassifikation (CPC):
(C-Sets verfügbar)
**C08G 18/73; C08G 18/0895; C08G 18/10; C08G 18/3206** (Forts.)

(86) Internationale Anmeldenummer:
**PCT/EP2020/085499**

(87) Internationale Veröffentlichungsnummer:
**WO 2021/122292 (24.06.2021 Gazette 2021/25)**

(54) **THERMOPLASTISCHES POLYURETHAN MIT HOHER BIEGESPANNUNG**

THERMOPLASTIC POLYURETHANE WITH HIGH RESISTANCE TO BENDING STRESS

POLYURÉTHANE THERMOPLASTIQUE AYANT UNE CONTRAINTE À LA FLEXION ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2019 EP 19216820**

(43) Veröffentlichungstag der Anmeldung:
**26.10.2022 Patentblatt 2022/43**

(73) Patentinhaber: **Covestro Deutschland AG**
**51373 Leverkusen (DE)**

(72) Erfinder:
• **MATNER, Mathias**
**41464 Neuss (DE)**
• **KÖNIG, Thomas**
**51375 Leverkusen (DE)**
• **GARSKA, Bernd**
**50677 Köln (DE)**
• **BELLINGHAUSEN, Rainer**
**51519 Odenthal (DE)**
• **PRENVEILLE, Thomas**
**27170 Ecardenville-La- Campagne (FR)**
• **HOUBEN, Claudia**
**52525 Heinsberg (DE)**

(74) Vertreter: **Levpat**
**c/o Covestro AG**
**Gebäude K12**
**51365 Leverkusen (DE)**

(56) Entgegenhaltungen:
**US-A1- 2017 198 086**

(52)  Gemeinsame Patentklassifikation (CPC): (Forts.)

C-Sets
**C08G 18/10, C08G 18/73**

**Beschreibung**

Die Erfindung betrifft ein thermoplastisches Polyurethan erhältlich durch die Umsetzung von mindestens folgenden Aufbaukomponenten: einem oder mehreren aliphatischen Diisocyanaten A) mit einem Molekulargewicht von 140 g/mol bis 170 g/mol und einem oder mehreren aliphatischen Diolen B) mit einem Molekulargewicht von 62 g/mol bis 120 g/mol, wobei die zur Erzeugung des thermoplastischen Polyurethans eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15 liegt, sowie ein Verfahren zu dessen Herstellung, Zusammensetzungen, Formkörper, Folien und / oder Fasern enthaltend das thermoplastische Polyurethan.

Polyurethane und insbesondere thermoplastische Polyurethane werden aufgrund ihrer hervorragenden physikalischen Eigenschaften seit Jahren für die unterschiedlichsten Einsatzzwecke verwendet. Trotz der breiten Verwendbarkeit von Polyurethanen gibt es Anwendungsbereiche, in denen andere Kunststoffe, wie beispielsweise Polyamid-Kunststoffe, verwendet werden, weil keine Polyurethane mit geeigneten physikalischen Eigenschaften verfügbar sind oder diese nur schwer bereitgestellt werden können.

Polyurethane, die aus kurzkettigen aliphatischen Diolen und kurzkettigen aliphatischen Polyisocyanaten aufgebaut sind, weisen vergleichbare oder bessere Eigenschaften zu den Polyamid-Kunststoffen auf, beispielsweise bezüglich der Lackierbarkeit des Kunststoffs. Allerdings erweisen sich die vielfältigen Reaktionsmöglichkeiten der Isocyanate als nachteilig für die Herstellung von thermoplastischen Polyurethanen. Durch die Polyadditionsreaktion zwischen Isocyanat- und Hydroxygruppen entstehen erst bei sehr hohen Umsatzgraden Molekulargewichte, die gute mechanische Eigenschaften erwarten lassen. Bei hohen Umsatzgraden steigt aber auch die Neigung zu Nebenreaktionen, wie zum Beispiel der Bildung von Allophanat-, Biuret- oder Isocyanuratgruppen, die Verzweigungspunkte in der Polymerstruktur darstellen und dadurch den thermoplastischen Charakter reduzieren oder im Extremfall sogar Duromere ergeben (G. Oertel, Kunststoff-Handbuch, Bd. 7, 3. Aufl., 1993, S.12ff). Ferner sind die mechanischen Eigenschaften von dem Herstellungsverfahren abhängig.

O. Bayer (Angew. Chem. 1947, 59, 257-288) offenbart die Herstellung von Polyurethanen aus aliphatischen Diisocyanaten und aliphatischen Diolen im Batch-Verfahren, insbesondere ein Polyurethan aus 1,6-Hexamethylendiisocyanat und 1,4-Butandiol (Perlon U, Igamid U), welches als feines, sandiges Pulver aus einer Fällungspolymerisation in Dichlorbenzol erhalten wird. DE728981 offenbart die Herstellung von Polyurethanen und Polyharnstoffen in einem lösungsmittelhaltigen oder lösungsmittelfreien Batch-Verfahren.

V. V. Korshak (Soviet Plastics 1961, 7, 12-15) offenbart ein Semi-Batch-Laborverfahren zur Herstellung eines Polyurethans aus 1,6-Hexamethylendiisocyanat und 1,4-Butandiol. Hierzu wird 1,6-Hexamethylendiisocyanat tropfenweise in erhitztes 1,4-Butandiol eingetragen, was zu einem spröden Additionsprodukt führt.

Je nach angewendetem Verfahren, weisen die gemäß dem Stand der Technik erzeugten Polyurethane unterschiedliche Eigenschaften auf. Insbesondere Polyurethane, die nach diesen Verfahren hergestellt werden und aus kurzkettigen aliphatischen Diolen und kurzkettigen aliphatischen Polyisocyanaten aufgebaut sind, weisen eine geringe Biegespannung auf, was deren Verwendung in manchen Anwendungen einschränkt. Hinzu kommt, dass sich die bekannten Batch und Semi-Batch-Verfahren schlecht up-scalen lassen, was einen Zugang im industriellen Maßstab deutlich einschränkt bis gar unmöglich macht.

Daher werden vielfältige Maßnahmen getroffen, um Nebenreaktionen zu minimieren und die Reaktion so nahe wie möglich an der von Schulz und Flory beschriebenen idealen Polyaddition zu führen und eine möglichst niedrige Polydispersität zu erreichen.

Aufgabe der vorliegenden Erfindung war es daher, ein thermoplastisches Polyurethan mit einer hohen Biegespannung bereitzustellen.

Weiterhin war es eine Aufgabe der Erfindung ein Verfahren zur Herstellung der erfindungsgemä-ßen thermoplastischen Polyurethanen auf Basis von aliphatischen Komponenten bereitzustellen, das einen thermisch-kontrollierbaren und kosteneffizienten Prozess ermöglicht.

Eine weitere Aufgabe der Erfindung war es, Formkörper, Folien oder Fasern aus dem thermoplastischen Polyurethan bereitzustellen.

Mindestens eine dieser Aufgaben wird gelöst durch ein thermoplastisches Polyurethan erhältlich durch die Umsetzung von mindestens folgenden Aufbaukomponenten:

A) einem oder mehreren aliphatischen Diisocyanaten mit einem Molekulargewicht von 140 g/mol bis 170 g/mol und
B) einem oder mehreren aliphatischen Diolen mit einem Molekulargewicht von 62 g/mol bis 120 g/mol,

wobei die zur Erzeugung des thermoplastischen Polyurethans eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

Überraschend wurde nun gefunden, dass die erfindungsgemäßen thermoplastischen Polyurethane sehr gute mechanische Eigenschaften, insbesondere eine hohe Biegespannung, aufweisen, während bekannte Polyurethane, die ebenfalls aus kurzkettigen aliphatischen Diolen und kurzkettigen aliphatischen Polyisocyanaten aufgebaut sind, sehr spröde und somit für industrielle Anwendungen, in denen eine ausreichend hohe Biegespannung benötigt wird, kaum geeignet sind. Die erfindungsgemäßen thermoplastischen Polyurethane können geringe duroplastische Anteile, wie sie beispielsweise durch Allophanatstrukturelemente, Biuretstrukturelemente oder durch die anteilige Verwendung von Triolen bzw. Triisocyanaten als Monomere entstehen, in der Polymermatrix enthalten, aber nur so viel, dass die thermoplastischen Eigenschaften der erfindungsgemäßen Polyurethane erhalten bleiben. Typischerweise sind dies 0,5 Gew.-% - 5 Gew.-%, vorzugsweise 0,5 Gew.-% - 4 Gew.-%, besonders bevorzugt 0,5 Gew.-% - 3 Gew.-%, noch bevorzugter 0,5 Gew.-% - 2 Gew.-% und ganz besonders bevorzugt 0,5 Gew.-% -1 Gew.-% duroplastische Anteile, bezogen auf das Gesamtgewicht des erfindungsgemäßen thermoplastischen Polymers.

Falls nicht explizit anders angegeben beziehen sich alle Prozentangaben auf das Gewicht (Gew.-%). Die Angabe Gew.-% bezieht sich dabei auf das Gesamtgewicht des jeweiligen Systems oder das Gesamtgewicht der jeweiligen Komponente. Zum Beispiel kann ein Copolymer ein bestimmtes Monomer in Gew.-% angegeben enthalten, in diesem Fall würden sich die Gewichtsprozente auf das Gesamtgewicht des Copolymers beziehen.

Das Wort "ein" im Zusammenhang mit zählbaren Größen ist im Rahmen der vorliegenden Erfindung nur dann als Zahlwort zu verstehen, wenn dies ausdrücklich gesagt wird (z. B. durch den Ausdruck "genau ein"). Wenn im Folgenden beispielsweise von "einem Polyol" gesprochen wird, ist das Wort "ein" lediglich als unbestimmter Artikel und nicht als Zahlwort aufzufassen, es ist also damit auch eine Ausführungsform umfasst, die ein Gemisch aus mindestens zwei Polyolen enthält.

Unter "aliphatisch" oder "aliphatischer Rest" werden im Sinne der Erfindung acyclische gesättigte Kohlenwasserstoffreste verstanden, die verzweigt oder linear sowie vorzugsweise unsubstituiert sind. Diese aliphatischen Kohlenwasserstoffreste enthalten vorzugsweise 2, 3, 4, 5 oder 6 Kohlenstoffatome. Das erfindungsgemäße aliphatische Polyurethan ist aus Polyolen und Polyisocyanaten mit jeweils acyclischen, gesättigten Kohlenwasserstoffgrundkörpern aufgebaut, wie beispielsweise 1,6-Diisocyanatohexan (HDI) und 1,4-Butandiol (BDO).

Das erfindungsgemäße thermoplastische aliphatische Polyurethan besteht vorzugsweise im Wesentlichen aus unverzweigten, linearen, besonders bevorzugt im Wesentlichen aus unverzweigten, linearen, unsubstituierten Polymerketten, wobei die Polymerketten keine cycloaliphatischen Gruppen enthalten. "Im Wesentlichen" bedeutet in diesem Zusammenhang, dass mindestens 95 Mol-%, vorzugsweise mindestens 98 Mol-%, besonders bevorzugt mindestens 99 Mol-% und noch bevorzugter mindestens 99,5 Mol-% der Polymerketten des thermoplastischen aliphatischen Polyurethans aus unverzweigten, linearen, vorzugsweise unverzweigten, linearen, unsubstituierten Polymerketten besteht, wobei die Polymerketten keine cycloaliphatischen Gruppen enthalten.

Bevorzugt bedeuten erfindungsgemäß die Ausdrücke "umfassend" oder "enthaltend", "im Wesentlichen bestehend aus" und besonders bevorzugt "bestehend aus".

Falls nicht explizit anders angegeben, wird in der vorliegende Erfindung das Zentrifugenmittel der Molmasse $\overline{M}_z$ mittels Gelpermeationschromatographie (GPC) unter Verwendung von Polymethylmethacrylat als Standard bestimmt. Die zu vermessende Probe wird in einer Lösung von 3 g Kaliumtrifluoracetat in 400 Kubikzentimeter Hexafluorisopropanol aufgelöst (Probenkonzentration ca. 2 mg/Kubikzentimeter), dann mit einer Flussrate von 1 Kubikzentimeter/Minute über eine Vorsäule gegeben und anschließend über drei in Reihe geschaltete Chromatographiesäulen getrennt, zuerst über eine 1000 Å PSS PFG 7 $\mu$m Chromatographiesäule, dann über eine 300 Å PSS PFG 7 $\mu$m Chromatographiesäule und zuletzt über eine 100 Å PSS PFG 7 $\mu$m Chromatographiesäule. Als Detektor wurde ein Brechungsindex-Detektor (RI-Detektor) verwendet. Das Zentrifugenmittel der Molmasse ($\overline{M}_z$) wurde aus den durch die Messung der Gelpermeationschromatographie erhaltenen Daten mit Hilfe der folgenden Gleichung errechnet:

$$\overline{M}_z = \frac{\sum_i n_i M_i^3}{\sum_i n_i M_i^2} \text{ in g/mol}$$

wobei,

$M_i$ die molare Masse der Polymere der Fraktion $i$ ist, so dass $M_i < M_{i+1}$ für alle $i$, in g/mol ist,

$n_i$ die Stoffmenge des Polymers der Fraktion $i$, in mol ist.

$\overline{M}_{peak}$ ist die Molmasse des Maximums der Gelpermeationschromatographie-Kurve. Zur Bestimmung von $\overline{M}_{peak}$ werden die durch die Gelpermeationschromatographie bestimmten Molmassenanteile logarithmisch über der Molmasse aufgetragen, wobei die Molmassenanteile mit der Molmasse skaliert werden, damit die Flächengleichheit der Auftragung gewahrt wird.

Die Peak-Molmasse, $\overline{M}_{peak}$ ergibt sich aus dem Maximum dieser logarithmischen Auftragung zu $\overline{M}_{peak} = M_k$, so dass $w_k M_k = \max(w_i M_i)$ für alle $i$, in g/mol
Wobei

$M_k$ die molare Masse der Polymere der Fraktion $k$ in g/mol ist,

$k$ ein Index ist,

$w_i = \dfrac{m_i}{m_g}$ der Massenanteil des Polymers der Fraktion $i$ ist,

$m_i$ die Masse des Polymers der Fraktion $i$, $m_i = n_i M_i$ in g ist,

$m_g$ die Gesamtmasse des Polymers, $m_g = \sum_i m_i$ in g ist und

$M_i$ wie oben definiert.

Mit anderen Worten: $\overline{M}_{peak}$ ist die Molmasse, bei der die Kurve der Molmassenverteilung ihr Maximum erreicht.

Falls nicht explizit anders angegeben, werden in der vorliegenden Erfindung Schmelzpunkte und Glasübergangspunkte mittels DSC (Differential Scanning Calorimetry) mit einem Mettler DSC 12E (Mettler Toledo GmbH, Gießen, DE) entsprechend DIN EN 61006 (November 2004) bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 20 K/min. Die Kühlung erfolgte durch flüssigen Stickstoff. Als Spülgas wurde Stickstoff verwendet. Die angegebenen Werte basieren jeweils auf der Auswertung der 2. Aufheizkurve.

Eine bevorzugte Ausführungsform betrifft ein thermoplastisches Polyurethanpolymer erhalten oder erhältlich durch die Umsetzung von einem oder mehreren aliphatischen Diisocyanaten mit einem Molekulargewicht von 140 g/mol bis 170 g/mol und einem oder mehreren aliphatischen Diolen mit einem Molekulargewicht von 62 g/mol bis 120 g/mol und mit mindestens einem Kettenverlängerer, wobei in einem ersten Schritt zumindest ein oder mehrere aliphatische Diisocyanate A) mit einem Molekulargewicht von 140 g/mol bis 170 g/mol mit einem oder mehreren aliphatischen Diolen B) mit einem Molekulargewicht von 62 g/mol bis 120 g/mol zu mindestens einem Prepolymer umgesetzt werden, vorzugsweise zu mindestens einem Hydroxy-terminierten Prepolymer, und das im ersten Schritt erhaltene mindestens eine Prepolymer in einem zweiten Schritt mit mindestens einem Kettenverlängerer zum thermoplastischen Polyurethanpolymer umgesetzt wird, wobei die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass das Verhältnis $\overline{M}_z / \overline{M}_{peak}$ des thermoplastischen Polyurethans in einem Bereich von 3 bis 15 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer bevorzugten Ausführungsform erfolgt die Umsetzung in einem Schleifenreaktor (Loop-Reaktor).

Eine bevorzugte Ausführungsform betrifft ein thermoplastisches aliphatisches Polyurethanpolymer erhalten oder erhältlich durch die Umsetzung von einem oder mehreren aliphatischen Diisocyanaten A), mit einem Molekulargewicht von 140 g/mol bis 170 g/mol und einem oder mehreren aliphatischen Diolen B), mit einem Molekulargewicht von 62 g/mol bis 120 g/mol, gegebenenfalls in Gegenwart mindestens eines Katalysators und/ oder Hilfs- und Zusatzstoffen, wobei die zur Erzeugung des thermoplastischen Polyurethanpolymers eingesetzten Aufbaukomponenten zu mindestens 95 Gew.-% aus einem oder mehreren aliphatischen Diisocyanaten A), und einem oder mehreren aliphatischen Diolen B), bezogen auf die Gesamtmasse der eingesetzten Aufbaukomponenten, bestehen, wobei die einen oder mehreren aliphatischen Polyisocyanate und die einen oder mehreren aliphatischen Polyole in einem molaren Verhältnis im Bereich von 1,0 : 0,95 bis 0,95 : 1,0 eingesetzt werden in einem Verfahren umfassend die folgenden Schritte:

a) Mischen eines Diisocyanatstroms (A) und eines Diolstroms (B) in einer ersten Mischungseinrichtung (7), so dass ein Mischungsstrom (C) erhalten wird,

b) Einleiten des Mischungsstroms (C) in einen Kreislaufstrom (D), der in einem Kreislauf geführt wird, wobei die Monomere des Diisocyanatstroms (A) und des Diolstroms (B) im Kreislaufstrom (D) zu OH-funktionellen Prepolymeren weiterreagieren,

c) Abteilen eines Teilstroms vom Kreislaufstrom (D) als Prepolymerstrom (E) und Einleiten desselben in einen Extruder (18),

d) Einleiten eines Isocyanatzuführungsstroms (F) in den Extruder (18) in Extruderarbeitsrichtung stromabwärts der Einleitung des Prepolymerstroms (E),

e) Umsetzen des Prepolymerstroms (E) mit dem Isocyanatzuführungsstrom (F) in dem Extruder (18) unter Erhalt des thermoplastischen Polyurethans (G) als Extrudat,

dadurch gekennzeichnet, dass das Verhältnis $\overline{M}_z/\overline{M}_{peak}$ des thermoplastischen Polyurethans in einem Bereich von 3 bis 15 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer bevorzugten Ausführungsform liegt das das Verhältnis $\overline{M}_z/\overline{M}_{peak}$ des erfindungsgemäßen thermoplastischen Polyurethans in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12.

In einer weiteren bevorzugten Ausführungsform liegt das $\overline{M}_z$ des erfindungsgemäßen thermoplastischen Polyurethans in einem Bereich von 100000 g/mol bis 900000 g/mol, vorzugsweise in einem Bereich von 110000 g/mol bis 850000 g/mol, besonders bevorzugt in einem Bereich von 120000 g/mol bis 800000 g/mol, noch bevorzugter in einem Bereich von 125000 g/mol bis 770000 g/mol, wobei $\overline{M}_z$ das Zentrifugenmittel der Molmasse ist, bestimmt durch Gelpermeationschromatographie in Hexafluoroisopropanol gegen Polymethylmethacrylat als Standard.

In einer bevorzugten Ausführungsform besteht das erfindungsgemäße thermoplastische Polyurethanpolymer zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus einem oder mehreren aliphatischen Diisocyanaten A) und einem oder mehreren aliphatischen Diolen B) bezogen auf die Gesamtmasse des Polyurethanpolymers.

Als aliphatische Diisocyanate A) eigenen sich alle dem Fachmann bekannten monomeren aliphatischen Diisocyanate, die ein Molekulargewicht von 140 g/mol bis 170 g/mol aufweisen. Es ist dabei unerheblich, ob die Diisocyanate mittels Phosgenierung oder nach einem phosgenfreien Verfahren erhalten wurden. Die Diisocyanate und / oder deren Vorläuferverbindungen können aus fossilen oder biologischen Quellen gewonnen worden sein. Vorzugsweise wird 1,6-Diisocyanatohexan (HDI) aus 1,6-Hexamethylendiamin und 1,5-Diisocyanatopentan aus 1,5-Pentamethylendiamin hergestellt, wobei 1,6-Hexamethylendiamin und 1,5-Pentamethylendiamin aus biologischen Quellen, vorzugsweise durch bakterielle Fermentation, gewonnen werden. Bevorzugt sind die aliphatischen Diisocyanate zum Aufbau des erfindungsgemäßen thermoplastischen Polyurethanpolymers ausgewählt aus der Gruppe bestehend aus 1,4-Diisocyanatobutan (BDI), 1,5-Diisocyanatopentan (PDI), 1,6-Diisocyanatohexan (HDI) und 2-Methyl-1,5-diisocyanatopentan oder einer Mischung von mindestens zwei hieraus.

In einer bevorzugten Ausführungsform ist das eine oder sind die mehreren aliphatischen Diisocyanate A) ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus. In einer anderen bevorzugten Aufführungsform werden 1,5-Diisocyanatopentan und / oder 1,6-Diisocyanatohexan als aliphatische Diisocyanate A) eingesetzt. In einer weiteren bevorzugten Aufführungsform wird nur 1,6-Diisocyanatohexan als aliphatisches Diisocyanat A) eingesetzt.

Als aliphatische Diole B) eignen sich alle dem Fachmann bekannten organische Diole die ein Molekulargewicht von 62 g/mol bis 120 g/mol aufweisen. Die Diole und / oder dessen Vorläuferverbindungen können aus fossilen oder biologischen Quellen gewonnen worden sein. Bevorzugt sind die aliphatischen Diole zum Aufbau des erfindungsgemäßen thermoplastischen Polyurethanpolymers ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,2-Pentandiol, 1,3-Pentandiol, 1,4-Pentandiol, 1,5-Pentandiol, 1,2-Hexandiol, 1,3-Hexandiol, 1,4-Hexandiol, 1,5-Hexandiol und 1,6-Hexandiol oder einer Mischung aus mindestens zwei hieraus.

In einer bevorzugten Ausführungsform ist das eine oder sind die mehreren aliphatischen Diole B) ausgewählt sind aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus. In einer weiteren bevorzugten Aufführungsform werden 1,3-Propandiol, 1,4-Butandiol, 1,6-Hexandiol und / oder Mischungen aus mindestens zwei hieraus als aliphatische Diole B) eingesetzt. In einer weiteren bevorzugten Aufführungsform werden 1,4-Butandiol und / oder 1,6-Hexandiol als aliphatische Diole B) eingesetzt. In einer anderen bevorzugten Aufführungsform wird nur 1,4-Butandiol als aliphatisches Diol eingesetzt.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus und

B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und

B) einem oder mehreren aliphatischen Diolen ausgewählt aus der Gruppe bestehend aus 1,3-Propandiol, 1,4-Butandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten: A) einem oder mehreren aliphatischen Diisocyanaten ausgewählt aus der Gruppe bestehend aus 1,5-Diisocyanatopentan, 1,6-Diisocyanatohexan oder einer Mischung hieraus und B) 1,4-Butandiol,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten A) und 1,4-Butandiol B), bezogen auf die Gesamtmasse der eingesetzten Aufbaukomponenten, bestehen, wobei die einen oder mehreren aliphatischen Diisocyanate A) und 1,4-Butandiol B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15 liegt,

wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und
B) 1,4-Butandiol,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus 1,6-Diisocyanatohexan A) und 1,4-Butandiol B), bezogen auf die Gesamtmasse der eingesetzten Aufbaukomponenten, bestehen, wobei 1,6-Diisocyanatohexan A) und 1,4-Butandiol B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus und
B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15, vorzugsweise in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und
B) einem oder mehreren aliphatischen Diolen ausgewählt aus der Gruppe bestehend aus 1,3-Propandiol, 1,4-Butandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15, vorzugsweise in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und
B) 1,4-Butandiol,

wobei die zur Erzeugung des thermoplastischen Polyurethanpolymers eingesetzten Aufbaukomponenten zu mindestens 95 Gew.-% aus einem oder mehreren aliphatischen Diisocyanaten A) und 1,4-Butandiol B), bezogen auf die Gesamtmasse der eingesetzten Aufbaukomponenten, bestehen, wobei die einen oder mehreren aliphatischen Diisocyanate A) und 1,4-Butandiol B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15, vorzugsweise in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und
B) 1,4-Butandiol,

wobei die zur Erzeugung des thermoplastischen Polyurethanpolymers eingesetzten Aufbaukomponenten zu mindestens 95 Gew.-% aus 1,6-Diisocyanatohexan A) und 1,4-Butandiol B), bezogen auf die Gesamtmasse der eingesetzten Aufbaukomponenten, bestehen, wobei 1,6-Diisocyanatohexan A) und 1,4-Butandiol B) in einem molaren Verhältnis im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15, vorzugsweise in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus und
B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 15 liegt und (ii) das $\overline{M}_z$ des thermoplastischen Polyurethans in einem Bereich von 100000 g/mol bis 900000 g/mol, vorzugsweise in einem Bereich von 110000 g/mol bis 850000 g/mol, besonders bevorzugt in einem Bereich von 120000 g/mol bis 800000 g/mol, noch bevorzugter in einem Bereich von 125000 g/mol bis 770000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und
B) einem oder mehreren aliphatischen Diolen ausgewählt aus der Gruppe bestehend aus 1,3-Propandiol, 1,4-Butandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 15 liegt und (ii) das $\overline{M}_z$ des thermoplastischen Polyurethans in einem Bereich von 100000 g/mol bis 900000 g/mol, vorzugsweise in einem Bereich von 110000 g/mol bis 850000 g/mol, besonders bevorzugt in einem Bereich von 120000 g/mol bis 800000 g/mol, noch bevorzugter in einem Bereich von 125000 g/mol bis 770000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und
B) 1,4-Butandiol,

wobei die zur Erzeugung des thermoplastischen Polyurethanpolymers eingesetzten Aufbaukomponenten zu mindestens 95 Gew.-% aus einem oder mehreren aliphatischen Diisocyanaten A) und 1,4-Butandiol B), bezogen auf die Gesamtmasse der eingesetzten Aufbaukomponenten, bestehen, wobei die einen oder mehreren aliphatischen Diisocyanate A) und 1,4-Butandiol B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 15 liegt und (ii) das $\overline{M}_z$ des thermoplastischen Polyurethans in einem Bereich von 100000 g/mol bis 900000 g/mol, vorzugsweise in einem Bereich von 110000 g/mol bis 850000 g/mol, besonders bevorzugt in einem Bereich von 120000 g/mol bis 800000 g/mol, noch bevorzugter in einem Bereich von 125000 g/mol bis 770000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und
B) 1,4-Butandiol,

wobei die zur Erzeugung des thermoplastischen Polyurethanpolymers eingesetzten Aufbaukomponenten zu mindestens 95 Gew.-% aus 1,6-Diisocyanatohexan A) und 1,4-Butandiol B), bezogen auf die Gesamtmasse der eingesetzten Aufbaukomponenten, bestehen, wobei 1,6-Diisocyanatohexan A) und 1,4-Butandiol B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 15 liegt und (ii) das $\overline{M}_z$ des thermoplastischen Polyurethans in einem Bereich von 100000 g/mol bis 900000 g/mol, vorzugsweise in einem Bereich von 110000 g/mol bis 850000 g/mol, besonders bevorzugt in einem Bereich von 120000 g/mol bis 800000 g/mol, noch bevorzugter in einem Bereich von 125000 g/mol bis 770000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus und
B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt und (ii) das $\overline{M}_z$ des thermoplastischen Polyurethans in einem Bereich von 100000 g/mol bis 900000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und
B) einem oder mehreren aliphatischen Diolen ausgewählt aus der Gruppe bestehend aus 1,3-Propandiol, 1,4-Butandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt und (ii) das $\overline{M}_z$ des thermoplastischen Polyurethans in einem Bereich von 100000 g/mol bis 900000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und
B) 1,4-Butandiol,

wobei die zur Erzeugung des thermoplastischen Polyurethanpolymers eingesetzten Aufbaukomponenten zu mindestens 95 Gew.-% aus einem oder mehreren aliphatischen Diisocyanaten A) und 1,4-Butandiol B), bezogen auf die Gesamtmasse der eingesetzten Aufbaukomponenten, bestehen, wobei die einen oder mehreren aliphatischen Diisocyanate A) und 1,4-Butandiol B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt und (ii) das $\overline{M}_z$ des thermoplastischen Polyurethans in einem Bereich von 100000 g/mol bis 900000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und
B) 1,4-Butandiol,

wobei die zur Erzeugung des thermoplastischen Polyurethanpolymers eingesetzten Aufbaukomponenten zu mindestens 95 Gew.-% aus 1,6-Diisocyanatohexan A) und 1,4-Butandiol B), bezogen auf die Gesamtmasse der eingesetzten Aufbaukomponenten, bestehen, wobei 1,6-Diisocyanatohexan A) und 1,4-Butandiol B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt und (ii) das $\overline{M}_z$ des thermoplastischen Polyurethans in einem Bereich von 100000 g/mol bis 900000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus und
B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3,5 bis 14 liegt und (ii) das $\overline{M}_z$ des thermoplastischen Polyurethans in einem Bereich von 110000 g/mol bis 850000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und
B) einem oder mehreren aliphatischen Diolen ausgewählt aus der Gruppe bestehend aus 1,3-Propandiol, 1,4-Butandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3,5 bis 14 liegt und (ii) das $\overline{M}_z$ des thermoplastischen Polyurethans in einem Bereich von 110000 g/mol bis 850000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und
B) 1,4-Butandiol,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten A) und 1,4-Butandiol B), bezogen auf die Gesamtmasse der eingesetzten Aufbaukomponenten, bestehen, wobei die einen oder mehreren aliphatischen Diisocyanate A) und 1,4-Butandiol B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3,5 bis 14 liegt und (ii) das $\overline{M}_z$ des thermoplastischen Polyurethans in einem Bereich von 110000 g/mol bis 850000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und
B) 1,4-Butandiol,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus 1,6-Diisocyanatohexan A) und 1,4-Butandiol B), bezogen auf die Gesamtmasse der eingesetzten Aufbaukomponenten, bestehen, wobei 1,6-Diisocyanatohexan A) und 1,4-Butandiol B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3,5 bis 14 liegt und (ii) das $\overline{M}_z$ des thermoplastischen Polyurethans in einem Bereich von 110000 g/mol bis 850000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus und
B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3,5 bis 12 liegt und (ii) das $\overline{M}_z$ des thermoplastischen Polyurethans in einem Bereich von 125000 g/mol bis 770000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und
B) einem oder mehreren aliphatischen Diolen ausgewählt aus der Gruppe bestehend aus 1,3-Propandiol, 1,4-Butandiol, 1,6-Hexandiol oder Mischungen aus mindestens zwei hieraus,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3,5 bis 12 liegt und (ii) das $\overline{M}_z$ des thermoplastischen Polyurethans in einem Bereich von 125000 g/mol bis 770000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,5-Diisocyanatopentan, 1,6-Diisocyanatohexan oder einer Mischung hieraus und
B) 1,4-Butandiol,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus einem oder mehreren aliphatischen Diisocyanaten A) und 1,4-Butandiol B), bezogen auf die Gesamtmasse der eingesetzten Aufbaukomponenten, bestehen, wobei die einen oder mehreren aliphatischen Diisocyanate A) und 1,4-Butandiol B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3,5 bis 12 liegt und (ii) das $\overline{M}_z$ des thermoplastischen Polyurethans in einem Bereich von 125000 g/mol bis 770000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und
B) 1,4-Butandiol,

wobei die zur Erzeugung des thermoplastischen Polyurethanpolymers eingesetzten Aufbaukomponenten zu mindestens 95 Gew.-%, vorzugsweise zu mindestens 98 Gew.-%, besonders bevorzugt zu mindestens 99 Gew.-%, noch bevorzugter zu 99,5 Gew.-% aus 1,6-Diisocyanatohexan A) und 1,4-Butandiol B), bezogen auf die Gesamtmasse der eingesetzten Aufbaukomponenten, bestehen, wobei 1,6-Diisocyanatohexan A) und 1,4-Butandiol B) in einem molaren Verhältnis im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3,5 bis 12 liegt und (ii) das $\overline{M}_z$ des thermoplastischen Polyurethans in einem Bereich von 125000 g/mol bis 770000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

Als weitere Aufbaukomponenten zur Erzeugung des thermoplastischen Polyurethanpolymers können, neben dem mindestens einem oder den mehreren aliphatischen Diisocyanaten A) und dem einem oder den mehreren aliphatischen Diolen B), auch ein oder mehrere Polyisocyanate C) und / oder ein oder mehrere NCO-reaktive Verbindungen D) eingesetzt werden. Diese weiteren Aufbaukomponenten C) und/oder D) sind von den Aufbaukomponenten A) und B) unterschiedlich und können in einer Menge von 0 Gew.-% bis 5 Gew.-% eingesetzt werden. In einer bevorzugten Ausführungsform bestehen die zur Erzeugung des thermoplastischen Polyurethanpolymers eingesetzten Aufbaukomponenten zu 0,1 Gew.-% bis 5 Gew.-% aus einem oder mehreren Polyisocyanaten C) und / oder einer oder mehreren NCO-reaktiven Verbindungen D), bezogen auf die Gesamtmasse der eingesetzten Aufbaukomponenten. Die Isocyanat-Komponenten A) und ggf. C) werden mit den Isocyanatreaktiven-Komponenten B) und ggf. D) in einem molaren Verhältnis von Isocyanat-Komponente : Isocyanatreaktiver-Komponente im Bereich von 1,0 : 0,95 bis 0,95 : 1,0 eingesetzt.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten mit einem Molekulargewicht von 140 g/mol bis 170 g/mol,
B) einem oder mehreren aliphatischen Diolen mit einem Molekulargewicht von 62 g/mol bis 120 g/mol,
C) einem oder mehreren Polyisocyanaten, und / oder
D) einer oder mehreren NCO-reaktiven Verbindungen,

wobei die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B) und zu ≤ 5 Gew.-% aus einem oder mehreren Polyisocyanaten C) und / oder einer oder mehreren NCO-reaktiven Verbindungen D) bestehen, bezogen auf die Gesamtmasse der eingesetzten Aufbaukomponenten.

In einer weiteren bevorzugten Ausführungsform ist das erfindungsgemäße thermoplastische Polyurethanpolymer erhältlich durch die Umsetzung von folgenden Aufbaukomponenten:

A) einem oder mehreren aliphatischen Diisocyanaten mit einem Molekulargewicht von 140 g/mol bis 170 g/mol,
B) einem oder mehreren aliphatischen Diolen mit einem Molekulargewicht von 62 g/mol bis 120 g/mol,
C) einem oder mehreren Polyisocyanaten, und / oder
D) einer oder mehreren NCO-reaktiven Verbindungen,

wobei die zur Erzeugung des thermoplastischen Polyurethanpolymers eingesetzten Aufbaukomponenten zu 95 Gew.-% bis 99,9 Gew.-% aus einem oder mehreren aliphatischen Diisocyanaten A) und einem oder mehreren aliphatischen Diolen B) und zu 0,1 Gew.-% bis 5 Gew.-% aus einem oder mehreren Polyisocyanaten C) und / oder einer oder mehreren NCO-reaktiven Verbindungen D) bestehen, bezogen auf die Gesamtmasse der eingesetzten Aufbaukomponenten.

Als Polyisocyanat C) zum Aufbau des erfindungsgemäßen Polyurethanpolymers eignen sich alle dem Fachmann an sich bekannten aliphatischen, cycloaliphatischen, aromatischen oder araliphatischen Di- und Triisocyanate, wobei es unerheblich ist, ob diese mittels Phosgenierung oder nach phosgenfreien Verfahren erhalten wurden. Daneben können auch die dem Fachmann an sich gut bekannten höhermolekularen Folgeprodukte (Oligo- und Polyisocyanate sowie NCO-Gruppen aufweisende Prepolymere, insbesondere NCO-Gruppen aufweisende Polyurethanprepolymere) monomerer Di- und/oder Triisocyanate mit Urethan-, Harnstoff-, Carbodiimid-, Acylharnstoff-, Isocyanurat-, Allophanat-, Biuret-, Oxadiazintrion-, Uretdion-, Iminooxadiazindionstruktur jeweils einzeln oder in beliebigen Mischungen untereinander eingesetzt werden. Bevorzugt als Polyisocyanat C) sind monomere Diisocyanate die ein Molekulargewicht von ≥ 140 g/mol bis ≤ 400 g/mol aufweisen.

Beispiele für geeignete aliphatische Diisocyanate sind 1,4-Diisocyanatobutan (BDI), 1,5-Diisocyanatopentan (PDI), 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,8-Diisocyanatooctan und 1,10-Diisocyanatodecan.

Beispiele für geeignete cycloaliphatische Diisocyanate sind 1,3- und 1,4-Diisocyanatocyclohexan, 1,4-Diisocyanato-3,3,5-trimethylcyclohexan, 1,3-Diisocyanato-2-methylcyclohexan, 1,3-Diisocyanato-4-methylcyclohexan, 1-Isocyanato-3,3,5-trimethyl-5-isocyanatomethyl-cyclohexan (Isophorondiisocyanat; IPDI), 1-Isocyanato-1-methyl-4(3)-isocyanatomethylcyclohexan, 2,4'- und 4,4'-Diisocyanatodicyclohexylmethan (H12MDI), 1,3- und 1,4-Bis(isocyanatomethyl)cyclohexan, Bis-(isocyanatomethyl)-norbornan (NBDI), 4,4'-Diisocyanato-3,3'-dimethyldicyclohexylmethan, 4,4'-Diisocyanato-3,3',5,5'-tetramethyldicyclohexylmethan, 4,4'-Diisocyanato-1,1'-bi(cyclohexyl), 4,4'-Diisocyanato-3,3'-dimethyl-1,1'-bi(cyclohexyl), 4,4'-Diisocyanato-2,2',5,5'-tetra-methyl-1,1'-bi(cyclohexyl), 1,8-Diisocyanato-p-menthan, 1,3-Diisocyanato-adamantan und 1,3-Dimethyl-5,7-diisocyanatoadamantan.

Beispiele für geeignete aromatische Diisocyanate sind 2,4- und 2,6-Diisocyanatotoluol (TDI), 2,4'- und 4,4'-Diisocyanatodiphenylmethan (MDI) und 1,5-Diisocyanatonaphthalin.

Beispiele für geeignete araliphatische Diisocyanate sind 1,3- und 1,4-Bis-(isocyanatomethyl)benzol (Xylylendiisocyanat; XDI), 1,3- und 1,4-Bis(1-isocyanato-1-methylethyl)-benzol (TMXDI).

Beispiele für geeignete Triisocyanate sind Triphenylmethan-4,4',4"-triisocyanat oder 4-Isocyanatomethyl-1,8-octandiisocyanat (TIN).

Weitere ebenfalls geeignete Diisocyanate finden sich darüber hinaus beispielsweise in HOUBEN-WEYL "Methoden der organischen Chemie", Band E20 "Makromolekulare Stoffe", Georg Thieme Verlag, Stuttgart, New York 1987, S. 1587-1593 oder in Justus Liebigs Annalen der Chemie Band 562 (1949) S. 75 - 136.

Als NCO-reaktive Verbindung D) zum Aufbau des erfindungsgemäßen Polyurethanpolymers eignen sich alle dem Fachmann an sich bekannten organischen Verbindungen, die wenigstens zwei isocyanatreaktive (NCO-reaktive) Gruppen aufweisen (NCO-reaktive Verbindung bzw. isocyanatreaktive Verbindung). Im Rahmen der vorliegenden Erfindung werden als NCO-reaktive Gruppen insbesondere Hydroxy-, Amino- oder Thiogruppen angesehen. In Sinne der Erfindung kann auch ein Gemisch aus verschiedenen NCO-reaktiven Verbindungen zum Aufbau des mindestens eines weiteren Strukturelementes (S) verwendet werden.

Als NCO-reaktive Verbindung D) können alle Systeme eingesetzt werden, die im Mittel wenigstens 1,5, bevorzugt 2 bis 3 und noch bevorzugter 2 NCO-reaktive Gruppen aufweisen.

Geeignete isocyanatreaktive Verbindungen sind beispielsweise aliphatische, araliphatische oder cycloaliphatische Diole, organische Triole, Polyester-, Polyether-, Polycarbonat-, Po-ly(meth)acrylat-, Polyurethanpolyole und Polyamine.

Beispiele für aliphatische, araliphatische oder cycloaliphatische Diole sind 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, 1,3-Cyclobutandiol, 1,3-Cyclopentandiol, 1,2-, 1,3- und 1,4-Cyclohexandiol, 1,4-Cyclohexandimethanol, 2-Cyclohexen-1,4-diol, 2-Methyl-1,4-cyclohexandiol, 2-Ethyl-1,4-cyclohexandiol, 2,2,4,4-Tetramethyl-1,3-cyclobutandiol, hydriertes Bisphenol A (2,2-Bis(4-hydroxycyclohexyl)propan), 1,3-Cycloheptandiol, 1,4-Cycloheptandiol, 2-Methyl-1,4-cycloheptandiol, 4-Methyl-1,3-cycloheptandiol, 4,4'-(1-Methylethyliden)-biscyclohexanol, 1,3-Cyclooctandiol, 1,4-Cyclooctandiol, 1,5-Cyclooctandiol, 5-Methyl-1,4-cyclooctandiol, 5-Ethyl-1,4-cyclooctandiol, 5-Propyl-1,4-cyclooctandiol, 5-Butyl-1,4-cyclooctandiol und 1,2-Benzoldimethanol.

Beispiele für organische Triole sind Glycerin und Trimethylolpropan.

Vorzugsweise werden aliphatische, araliphatische oder cycloaliphatische Diole mit Molekulargewichten von 62 g/mol bis 250 g/mol eingesetzt.

Geeignete Polyesterpolyole können in bekannter Weise durch Polykondensation von niedermolekularen Polycarbonsäurederivaten, wie beispielsweise Bernsteinsäure, Adipinsäure, Korksäure, Azelainsäure, Sebacinsäure, Dodekandisäure, Tetrahydrophthalsäureanhydrid, Hexahydrophthalsäureanhydrid, Tetrachlorphthalsäureanhydrid, Endomethylentetra-hydrophthalsäureanhydrid, Glutarsäureanhydrid, Maleinsäure, Maleinsäureanhydrid, Fumarsäure, Dimerfettsäure, Trimerfettsäure, Phthalsäure, Phthalsäureanhydrid, Isophthalsäure, Terephthalsäure, Zitronensäure oder Trimellithsäure, mit niedermolekularen Polyolen, wie beispielsweise Ethylenglykol, Diethylenglykol, Neopentylglykol, Hexandiol, Butandiol, 1,4-Dihydroxycyclohexan, 1,4-Dimethylolcyclohexan, Propylenglykol, Glycerin, Trimethylolpropan, 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol, oder durch Ring-öffnende Polymerisation cyclischer Carbonsäureester, wie ε-Caprolacton, hergestellt werden. Darüber hinaus lassen sich auch Hydroxycarbonsäurederivate, wie beispielsweise Milchsäure, Zimtsäure oder ω-Hydroxycapronsäure zu Polyesterpolyolen polykondensieren. Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und durch anschließende partielle Umesterung der Triglycerid-Derivate zu Alkylesterpolyolen mit 1 bis 12 C-Atomen im Alkylrest hergestellt werden.

Geeignete Polyetherpolyole sind in an sich bekannter Weise durch Alkoxylierung von geeigneten Starter-Molekülen unter Basenkatalyse oder Einsatz von Doppelmetallcyanidverbindungen (DMC-Verbindungen) zugänglich. Die Polyetherpolyole sind gegebenenfalls blockweise aufgebaute Polyadditionsprodukte cyclischer Ether an OH- oder NH-funktionelle Startermoleküle. Geeignete cyclische Ether sind beispielsweise Styroloxide, Ethylenoxid, Propylenoxid, Tetrahydrofuran, Butylenoxid, Epichlorhydrin, sowie deren beliebige Mischungen. Als Startermoleküle können die oben im Rahmen der Diskussion der Polyesterpolyole genannten mehrwertigen Alkohole einer OH-Funktionalität ≥ 2 sowie primäre oder sekundäre Amine und Aminoalkohole verwendet werden. Geeignete und bevorzugte Polyetherpolyole sind Di-, Tri-, Tetraethylenglykol, und Di-, Tri-, Tetrapropylenglykol.

Geeignete Polycarbonatpolyole sind in an sich bekannter Weise durch Umsetzung von organischen Carbonaten oder Phosgen mit Diolen oder Diol-Mischungen zugänglich. Hierfür geeignete organische Carbonate sind beispielsweise Dimethyl-, Diethyl- und Diphenylcarbonat. Geeignete mehrwertige Alkohole umfassen die oben im Rahmen der Diskussion der Polyesterpolyole genannten mehrwertigen Alkoholen einer OH-Funktionalität ≥ 2. Bevorzugt können 1,4-Butandiol, 1,6-Hexandiol und / oder 3-Methylpentandiol eingesetzt werden. Polyesterpolyole können auch zu Polycarbonatpolyolen umgearbeitet werden. Besonders bevorzugt werden bei der Umsetzung der genannten Alkohole zu Polycarbonatpolyolen Dimethyl- oder Diethylcarbonat eingesetzt.

Geeignete Polyacrylatpolyole sind in der Regel Copolymerisate und weisen vorzugsweise massenmittlere Molekulargewichte Mw zwischen 1.000 Dalton und 10.000 Dalton auf. Die Herstellung geeigneter Polyacrylatpolyole ist dem Fachmann bekannt. Sie werden durch radikalische Polymerisation von Hydroxylgruppen aufweisenden, olefinisch ungesättigten Monomeren oder durch radikalische Copolymerisation von Hydroxylgruppen aufweisenden, olefinisch ungesättigten Monomeren mit gegebenenfalls anderen olefinisch ungesättigten Monomeren, wie z.B. Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethyl-hexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclo-pentylacrylat, Cyclopentylmethacrylat, Isobornylacrylat, Isobornylmethacrylat oder insbe¬sondere Cyclohexylacrylat und/oder Cyclohexylmethacrylat. erhalten. Geeignete Hydroxylgruppen aufweisende, olefinisch ungesättigte Monomere sind insbesondere 2-Hydroxyethylacrylat, 2-Hydroxy-ethylmethacrylat, 2-Hydroxypropylacrylat, 2-Hydroxypropylmethacrylat, 3-Hydroxy-propyl-acrylat, 3-Hydroxypropylmethacrylat, 3-Hydroxybutylacrylat, 3-Hydroxybutylmethacrylat sowie ins¬be¬isondere 4-Hydroxybutylacrylat und/oder 4-Hydroxybutylmethacrylat. Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

Geeignete Polyurethanpolyole sind beispielsweise Hydroxy-terminierte Prepolymere, die aus den oben beschrieben Diisocyanaten und Diolen aufgebaut sind. Neben Urethangruppen können die Polyurethanpolyole auch Harnstoff-, Carbodiimid-, Acylharnstoff-, Isocyanurat-, Allophanat-, Biuret-, Oxadiazintrion-, Uretdion-, Iminooxadiazindionstrukturen enthalten. Herstellbar sind die Polyurethanpolyole durch Umsetzung von Diisocyanate mit Diolen nach dem Fachmann bekannten Herstellungsverfahren.

Beispiele für Polyamine sind Ethylendiamin, 1,2-Diaminopropan, 1,4-Diaminobutan, 2-Methylpentamethylendiamin, 1,6-Diaminohexan, 2,2,4- bzw. 2,4,4-Trimethylhexamethylendiamin, 1,2-Diaminocyclohexan, 1-Amino-3,3,5-trimethyl-5-aminomethylcyclohexan (Isophorondiamin, IPDA), 4,4'-Diaminodicyclohexyl-methan, Polyasparaginsäureester, wie sie beispielsweise nach dem Verfahren der EP-B 0 403 921 durch Umsetzung von Diaminen mit Fumarsäure- bzw. Maleinsäureestern erhältlich sind oder auch Polyetherpolyamine mit aliphatisch gebundenen primären Aminogruppen.

Die Umsetzung der Aufbaukomponenten A), B), ggf. C) und / oder ggf. D) zur Erzeugung des erfindungsgemäßen Polyurethanpolymers kann in Gegenwart von einem oder mehreren Katalysatoren stattfinden.

Geeignete erfindungsgemäße Katalysatoren sind die nach dem Stand der Technik bekannten und üblichen tertiären Amine, wie z. B. Triethylamin, Dimethylcyclohexylamin, N-Methylmorpholin, N,N'-Dimethyl-piperazin, 2-(Dimethylaminoethoxy)-ethanol, Diazabicyclo-(2,2,2)-octan und ähnliche, sowie insbesondere organische Metallverbindungen wie Titansäureester, Eisenverbindungen, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Bevorzugte Katalysatoren sind organische Metallverbindungen, insbesondere Titansäureester, Eisen- und / oder Zinnverbindungen.

Der Katalysator wird in Mengen von 0,001 Gew.-% bis 2,0 Gew.-%, bevorzugt von 0,005 Gew.-% bis 1,0 Gew.-% besonders bevorzugt von 0,01 Gew.-% bis 0,1 Gew.-% bezogen auf die Diisocyanatkomponente eingesetzt. Der Katalysator kann in Substanz eingesetzt werden oder gelöst in der Diol-Komponente. Ein Vorteil ist hierbei, dass die dann erhaltenen thermoplastischen Polyurethane keine Verunreinigungen durch gegebenenfalls mitverwendete Lösungsmittel für den Katalysator enthalten. Die Zugabe des Katalysators kann dabei in einer oder mehreren Portionen oder auch kontinuierlich, z. B. mit Hilfe einer geeigneten Dosierpumpe, über die gesamte Dauer der Umsetzung erfolgen.

Alternativ können aber auch Mischungen des bzw. der Katalysatoren mit einem Katalysatorlösungsmittel, bevorzugt mit einem organischen Katalysatorlösungsmittel, eingesetzt werden. Der Verdünnungsgrad der Katalysatorlösungen kann dabei innerhalb eines sehr breiten Bereichs frei gewählt werden. Katalytisch wirksam sind Lösungen ab einer Konzentration von 0,001 Gew.-%.

Geeignete Lösungsmittel für den Katalysator sind beispielsweise gegenüber Isocyanatgruppen inerte Lösungsmittel wie z.B. Hexan, Toluol, Xylol, Chlorbenzol, Essigsäureethylester, Essigsäurebutylester, Diethylenglykoldimethylether, Dipropylenglykoldimethylether, Ethylenglykolmonomethyl- oder -ethyletheracetat, Diethylenglykolethyl- und -butyletheracetat, Propylenglykolmonomethyl-etheracetat, 1-Methoxypropyl-2-acetat, 3- Methoxy-n-butylacetat, Propylenglykoldiacetat, Aceton, Methylethylketon, Methylisobutylketon, Cyclohexanon, Lactone, wie $\beta$-Propiolacton, $\gamma$-Butyrolacton, $\varepsilon$-Caprolacton und $\varepsilon$-Methylcaprolacton, aber auch Lösungsmittel wie N-Methylpyrrolidon und N-Methylcaprolactam, 1,2-Propylencarbonat, Methylenchlorid, Dimethylsulfoxid, Triethylphosphat oder beliebige Gemische derartiger Lösungsmittel.

Es können aber auch Lösungsmittel für den Katalysator zum Einsatz kommen, die gegenüber Isocyanaten reaktive Gruppen tragen und in das Diisocyanat eingebaut werden können. Beispiele für solche Lösungsmittel sind ein- oder mehrwertige einfache Alkohole, wie z. B. Methanol, Ethanol, n-Propanol, Isopropanol, n-Butanol, n-Hexanol, 2-Ethyl-1-hexanol, Ethylenglykol, Propylenglykol, die isomeren Butandiole, 2-Ethyl-1,3-hexandiol oder Glycerin; Etheralkohole, wie z. B. 1-Methoxy-2-propanol, 3-Ethyl-3-hydroxymethyloxetan, Tetrahydrofurfurylalkohol, Ethylengylkolmonomethylether, Ethylenglykolmonoethylether, Ethylenglykolmonobutylether, Diethylenglykolmonomethylether, Diethylenglykolmonothylether, Diethylenglykolmonobutylether, Diethylenglykol, Dipropylenglykol oder auch flüssige höhermolekulare Polyethylenglykole, Polypropylenglykole, gemischte Polyethylen/polypropylenglykole sowie deren Monoalkylether; Esteralkohole, wie z. B. Ethylenglykolmonoacetat, Propylenglykolmonolaurat, Glycerinmono- und diacetat, Glycerinmonobutyrat oder 2,2,4-Trimethyl-1,3-pentandiol-monoisobutyrat; ungesättigte Alkohole wie z. B. Allylalkohol, 1,1-Dimethyl-allylalkohol oder Oleinalkohol; araliphatische Alkohole wie z. B. Benzylalkohol; N-monosubstituierte Amide, wie z. B. N-Methylformamid, N-Methylacetamid, Cyanacetamid oder 2-Pyrrolidinon oder beliebige Gemische derartiger Lösungsmittel.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus,

B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

C) einem oder mehreren monomeren Diisocyanaten mit einem Molekulargewicht von 140 g/mol bis 400 g/mol,
D) einer oder mehreren NCO-reaktiven Verbindungen ausgewählt aus der Gruppe bestehend aus aliphatischen Diolen, araliphatischen Diolen, cycloaliphatischen Diolen, organischen Triolen, Polyesterpolyolen, Polyetherpolyolen, Polycarbonatpolyolen, Poly(meth)acrylatpolyolen, Polyurethanpolyolen, Polyaminen und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus einem oder mehreren aliphatischen Diisocyanaten A) und einem oder mehreren aliphatischen Diolen B) und zu 0,1 Gew.-% bis 5 Gew.-% aus einem oder mehreren Diisocyanaten C) und / oder einer oder mehreren NCO-reaktiven Verbindungen D), bezogen auf die Gesamtmasse der eingesetzten Aufbaukomponenten, bestehen, wobei die Diisocyanat-Komponenten A) und ggf. C) mit den NCO-reaktiven-Komponenten B) und ggf. D) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15, vorzugsweise in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und
B) 1,4-Butandiol,
C) einem oder mehreren monomeren Diisocyanaten mit einem Molekulargewicht von 140 g/mol bis 400 g/mol,
D) einer oder mehreren NCO-reaktiven Verbindungen ausgewählt aus der Gruppe bestehend aus aliphatischen, araliphatischen oder cycloaliphatischen Diolen mit Molekulargewichten von 62 g/mol bis 250 g/mol und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus 1,6-Diisocyanatohexan A) und 1,4-Butandiol B) und zu 0,1 Gew.-% bis 5 Gew.-% aus einem oder mehreren Diisocyanaten C) und / oder einer oder mehreren NCO-reaktiven Verbindungen D), bezogen auf die Gesamtmasse der eingesetzten Aufbaukomponenten, bestehen, wobei die Diisocyanat-Komponenten A) und ggf. C) mit den NCO-reaktiven-Komponenten B) und ggf. D) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass das Verhältnis $\overline{M}_z/\overline{M}_{peak}$ des thermoplastischen Polyurethans in einem Bereich von 3 bis 15, vorzugsweise in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus,
B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,
C) einem oder mehreren monomeren Diisocyanaten mit einem Molekulargewicht von 140 g/mol bis 400 g/mol,
D) einer oder mehreren NCO-reaktiven Verbindungen ausgewählt aus der Gruppe bestehend aus aliphatischen Diolen, araliphatischen Diolen, cycloaliphatischen Diolen, organischen Triolen, Polyesterpolyolen, Polyetherpolyolen, Polycarbonatpolyolen, Poly(meth)acrylatpolyolen, Polyurethanpolyolen, Polyaminen und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus einem oder mehreren aliphatischen Diisocyanaten A) und einem oder mehreren aliphatischen Diolen B) und zu 0,1 Gew.-% bis 5 Gew.-% aus einem oder mehreren Diisocyanaten C) und / oder einer oder mehreren NCO-reaktiven Verbindungen D), bezogen auf die Gesamtmasse der eingesetzten Aufbaukomponenten, bestehen, wobei die Diisocyanat-Komponenten A) und ggf. C) mit den NCO-reaktiven-Komponenten B) und ggf. D) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 15 liegt und (ii) das $\overline{M}_z$ des thermoplastischen Polyurethans in einem Bereich von 100000 g/mol bis 900000 g/mol, vorzugsweise in einem Bereich von 110000 g/mol bis 850000 g/mol, besonders bevorzugt in einem Bereich von 120000 g/mol bis 800000 g/mol, noch bevorzugter in einem Bereich von 125000 g/mol bis 770000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und
B) 1,4-Butandiol,
C) einem oder mehreren monomeren Diisocyanaten mit einem Molekulargewicht von 140 g/mol bis 400 g/mol,
D) einer oder mehreren NCO-reaktiven Verbindungen ausgewählt aus der Gruppe bestehend aus aliphatischen, araliphatischen oder cycloaliphatischen Diolen mit Molekulargewichten von 62 g/mol bis 250 g/mol und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus 1,6-Diisocyanatohexan A) und 1,4-Butandiol B) und zu 0,1 Gew.-% bis 5 Gew.-% aus einem oder mehreren Diisocyanaten C) und / oder einer oder mehreren NCO-reaktiven Verbindungen D), bezogen auf die Gesamtmasse der eingesetzten Aufbaukomponenten, bestehen, wobei die Diisocyanat-Komponenten A) und ggf. C) mit den NCO-reaktiven-Komponenten B) und ggf. D) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 15 liegt und (ii) das $\overline{M}_z$ des thermoplastischen Polyurethans in einem Bereich von 100000 g/mol bis 900000 g/mol, vorzugsweise in einem Bereich von 110000 g/mol bis 850000 g/mol, besonders bevorzugt in einem Bereich von 120000 g/mol bis 800000 g/mol, noch bevorzugter in einem Bereich von 125000 g/mol bis 770000 g/mol liegt , wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus,
B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,
C) einem oder mehreren monomeren Diisocyanaten mit einem Molekulargewicht von 140 g/mol bis 400 g/mol,
D) einer oder mehreren NCO-reaktiven Verbindungen ausgewählt aus der Gruppe bestehend aus aliphatischen Diolen, araliphatischen Diolen, cycloaliphatischen Diolen, organischen Triolen, Polyesterpolyolen, Polyetherpolyolen, Polycarbonatpolyolen, Poly(meth)acrylatpolyolen, Polyurethanpolyolen, Polyaminen und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus einem oder mehreren aliphatischen Diisocyanaten A) und einem oder mehreren aliphatischen Diolen B) und zu 0,1 Gew.-% bis 5 Gew.-% aus einem oder mehreren Diisocyanaten C) und / oder einer oder mehreren NCO-reaktiven Verbindungen D), bezogen auf die Gesamtmasse der eingesetzten Aufbaukomponenten, bestehen, wobei die Diisocyanat-Komponenten A) und ggf. C) mit den NCO-reaktiven-Komponenten B) und ggf. D) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 14, vorzugsweise in einem Bereich von 3,5 bis 14, besonders bevorzugt 3,5 bis 13, noch bevorzugter in einem Bereich von 3,5 bis 12,5, noch mehr bevorzugt in einem Bereich von 3,5 bis 12 liegt und (ii) das $\overline{M}_z$ des thermoplastischen Polyurethans in einem Bereich von 100000 g/mol bis 900000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und
B) 1,4-Butandiol,
C) einem oder mehreren monomeren Diisocyanaten mit einem Molekulargewicht von 140 g/mol bis 400 g/mol,
D) einer oder mehreren NCO-reaktiven Verbindungen ausgewählt aus der Gruppe bestehend aus aliphatischen, araliphatischen oder cycloaliphatischen Diolen mit Molekulargewichten von 62 g/mol bis 250 g/mol und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus 1,6-Diisocyanatohexan A) und 1,4-Butandiol B) und zu 0,1 Gew.-% bis 5 Gew.-% aus einem oder mehreren Diisocyanaten C) und / oder einer oder mehreren NCO-reaktiven Verbindungen D), bezogen auf die Gesamtmasse der eingesetzten Aufbaukomponenten, bestehen, wobei die Diisocyanat-Komponenten A) und ggf. C) mit den NCO-reaktiven-Komponenten B) und ggf. D) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 14, vorzugsweise in einem Bereich von 3,5 bis 14, besonders bevorzugt 3,5 bis 13, noch bevorzugter in einem Bereich von 3,5 bis 12,5, noch mehr bevorzugt in einem Bereich von 3,5 bis 12 liegt und (ii) das $\overline{M}_z$ des thermoplastischen Polyurethans in einem Bereich von 100000 g/mol bis 900000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus,
B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,
C) einem oder mehreren monomeren Diisocyanaten mit einem Molekulargewicht von 140 g/mol bis 400 g/mol,
D) einer oder mehreren NCO-reaktiven Verbindungen ausgewählt aus der Gruppe bestehend aus aliphatischen Diolen, araliphatischen Diolen, cycloaliphatischen Diolen, organischen Triolen, Polyesterpolyolen, Polyetherpolyolen, Polycarbonatpolyolen, Poly(meth)acrylatpolyolen, Polyurethanpolyolen, Polyaminen und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus einem oder mehreren aliphatischen Diisocyanaten A) und einem oder mehreren aliphatischen Diolen B) und zu 0,1 Gew.-% bis 5 Gew.-% aus einem oder mehreren Diisocyanaten C) und / oder einer oder mehreren NCO-reaktiven Verbindungen D), bezogen auf die Gesamtmasse der eingesetzten Aufbaukomponenten, bestehen, wobei die Diisocyanat-Komponenten A) und ggf. C) mit den NCO-reaktiven-Komponenten B) und ggf. D) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 15 liegt und (ii) das $\overline{M}_z$ des thermoplastischen Polyurethans in einem Bereich von 110000 g/mol bis 850000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und

B) 1,4-Butandiol,

C) einem oder mehreren monomeren Diisocyanaten mit einem Molekulargewicht von 140 g/mol bis 400 g/mol,

D) einer oder mehreren NCO-reaktiven Verbindungen ausgewählt aus der Gruppe bestehend aus aliphatischen, araliphatischen oder cycloaliphatischen Diolen mit Molekulargewichten von 62 g/mol bis 250 g/mol und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus 1,6-Diisocyanatohexan A) und 1,4-Butandiol B) und zu 0,1 Gew.-% bis 5 Gew.-% aus einem oder mehreren Diisocyanaten C) und / oder einer oder mehreren NCO-reaktiven Verbindungen D), bezogen auf die Gesamtmasse der eingesetzten Aufbaukomponenten, bestehen, wobei die Diisocyanat-Komponenten A) und ggf. C) mit den NCO-reaktiven-Komponenten B) und ggf. D) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3 bis 15 liegt und (ii) das $\overline{M}_z$ des thermoplastischen Polyurethans in einem Bereich von 110000 g/mol bis 850000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) einem oder mehreren aliphatischen Diisocyanaten ausgewählt aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus,

B) einem oder mehreren aliphatischen Diolen ausgewählt aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol oder Mischungen aus mindestens zwei hieraus,

C) einem oder mehreren monomeren Diisocyanaten mit einem Molekulargewicht von 140 g/mol bis 400 g/mol,

D) einer oder mehreren NCO-reaktiven Verbindungen ausgewählt aus der Gruppe bestehend aus aliphatischen Diolen, araliphatischen Diolen, cycloaliphatischen Diolen, organischen Triolen, Polyesterpolyolen, Polyetherpolyolen, Polycarbonatpolyolen, Poly(meth)acrylatpolyolen, Polyurethanpolyolen, Polyaminen und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus einem oder mehreren aliphatischen Diisocyanaten A) und einem oder mehreren aliphatischen Diolen B) und zu 0,1 Gew.-% bis 5 Gew.-% aus einem oder mehreren Diisocyanaten C) und / oder einer oder mehreren NCO-reaktiven Verbindungen D), bezogen auf die Gesamtmasse der eingesetzten Aufbaukomponenten, bestehen, wobei die Diisocyanat-Komponenten A) und ggf. C) mit den NCO-reaktiven-Komponenten B) und ggf. D) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3,5 bis 12 liegt und (ii) $\overline{M}_z$ des thermoplastischen Polyurethans in einem Bereich von 125000 g/mol bis 770000 g/mol liegt,, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer weiteren bevorzugten Ausführungsform ist das erfindungsgemäße thermoplastische Polyurethanpolymer erhältlich durch die Umsetzung von mindestens folgenden Aufbaukomponenten:

A) 1,6-Diisocyanatohexan und

B) 1,4-Butandiol,

C) einem oder mehreren monomeren Diisocyanaten mit einem Molekulargewicht von 140 g/mol bis 400 g/mol,

D) einer oder mehreren NCO-reaktiven Verbindungen ausgewählt aus der Gruppe bestehend aus aliphatischen, araliphatischen oder cycloaliphatischen Diolen mit Molekulargewichten von 62 g/mol bis 250 g/mol und / oder Mischungen aus mindestens zwei hieraus,

wobei die zur Erzeugung des thermoplastischen Polyurethanpolymers eingesetzten Aufbaukomponenten zu 95 Gew.-% bis 99,9 Gew.-% aus 1,6-Diisocyanatohexan A) und 1,4-Butandiol B) und zu 0,1 Gew.-% bis 5 Gew.-% aus einem oder mehreren Diisocyanaten C) und / oder einer oder mehreren NCO-reaktiven Verbindungen D), bezogen auf die Gesamtmasse der eingesetzten Aufbaukomponenten, bestehen, wobei die Diisocyanat-Komponenten A) und ggf. C) mit den NCO-reaktiven-Komponenten B) und ggf. D) in einem molaren Verhältnis von Diisocyanat-Komponente : NCO-reaktiver-Komponente im Bereich von 1,0 : 0,95 bis 0,95 : 1,0 eingesetzt werden, dadurch gekennzeichnet, dass (i) das Verhältnis $\overline{M}_z/\overline{M}_{peak}$ des thermoplastischen Polyurethans in einem Bereich von 3,5 bis 12 liegt und (ii) $\overline{M}_z$ des thermoplastischen Polyurethans in einem Bereich von 125000 g/mol bis 770000 g/mol liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

In einer bevorzugten Ausführungsform weist das erfindungsgemäße thermoplastische Polyurethanpolymer einen Urethangruppengehalt von 40 Gew.-% bis 60 Gew.-%, vorzugsweise von 40 Gew.-% bis 52 Gew.-% auf, bezogen auf das Gesamtgewicht des thermoplastischen Polyurethanpolymers auf. In einer besonders bevorzugten Ausführungsform weist das erfindungsgemäße thermoplastische Polyurethanpolymer einen Urethangruppengehalt von 44 Gew.-% bis 48 Gew.-%, noch bevorzugter von 44 Gew.-% bis 46 Gew.-% auf, bezogen auf das Gesamtgewicht des thermoplastischen Polyurethanpolymers.

Der Urethangruppengehalt wird bestimmt indem die Masse der (theoretischen) linearen Repetiereinheit wird durch die Masse der Urethanstruktureinheit geteilt wird. Hierbei wird jede Isocyanatgruppe (-NCO) mit einer Alkoholgruppe (-OH) umgesetzt. Der resultierende Wert wird mit 100 multipliziert um einen Wert in % zu erhalten.

Beispielberechnung:

| | | Masse in g/mol |
|---|---|---|
| Diisocyanat | 1,5-Pentamethylendiisocyanat | 154,17 |
| Diol | 1,4- Butandiol | 90,12 |
| Repetiereinheit | | 244,29 |
| Urethangruppe | | 59,02 |

Anzahl der theoretisch vorhandenen Urethangruppen = 2

Resultierende Urethangruppendichte = 48,32

In einer bevorzugten Ausführungsform weist das erfindungsgemäße thermoplastische Polyurethanpolymer ein mittels Elementaranalyse bestimmtes Gewichtsprozent-Verhältnis von O zu N von $\geq$ 1,5:1 bis $\leq$ 2,6:1 und ein mittels Elementaranalyse bestimmtes Gewichtsprozentverhältnis N zu C von $\geq$ 1:10 bis $\leq$ 1:3 auf.

In einer weiteren bevorzugten Ausführungsform ist das erfindungsgemäße thermoplastische Polyurethanpolymer ein semikristallines thermoplastisches Polyurethanpolymer.

In einer weiteren bevorzugten Ausführungsform weist das erfindungsgemäße thermoplastische Polyurethanpolymer einen Glasübergangspunkt von < 50 °C, vorzugsweise im Bereich zwischen $\geq$ 0 ° C und < 50 °C auf, bestimmt mittels Differential Scanning Calorimetry gemäß DIN EN 61006 (November 2004) .

In einer weiteren bevorzugten Ausführungsform weist das erfindungsgemäße thermoplastische Polyurethanpolymer einen Schmelzpunkt von > 150 °C auf, bestimmt mittels Differential Scanning Calorimetry gemäß DIN EN 61006 (November 2004).

In einer weiteren bevorzugten Ausführungsform liegen bei dem erfindungsgemäßen thermoplastischen Polyurethanpolymer zwischen dem Glasübergangspunkt, bestimmt mittels Differential Scanning Calorimetry gemäß DIN EN 61006 (November 2004), und dem Schmelzpunkt, bestimmt mittels Differential Scanning Calorimetry gemäß DIN EN 61006 (November 2004), des thermoplastischen Polyurethans mindestens 100 °C.

In einer weiteren bevorzugten Ausführungsform weist das erfindungsgemäße thermoplastische Polyurethan eine Biegespannung im Bereich von 73 MPa bis 79 MPa auf, bestimmt gemäß DIN EN ISO 178 (September 2013), durchgeführt mit einer Universalprüfmaschine 5566 der Firma Instron mit einer Geschwindigkeit von 5 mm/Minute, einem Finnenradius von 5 mm und einer Auflagedistanz von 64 mm.

Ein weiterer Gegenstand der Erfindung ist die Herstellung des erfindungsgemäßen thermoplastischen Polyurethanpolymer. Die Herstellung kann beispielsweise in einem mehrstufigen Verfahren erfolgen, wobei in mindestens einer Stufe mindestens ein Prepolymer, vorzugsweise ein Hydroxyterminiertes Prepolymer, aus mindestens einem aliphatischen Diisocyanat A) mit einem Molekulargewicht von 140 g/mol bis 170 g/mol und mindestens einem aliphatischen Diol B) mit einem Molekulargewicht von 62 g/mol bis 120 g/mol gebildet wird. Als weitere Aufbaukomponenten können ein oder mehrere Polyisocyanate C) und / oder ein oder mehrere NCO-reaktive Verbindungen D) eingesetzt werden. Die Komponenten C) und D) können dabei in die Prepolymere eingebaut werden, nur aus ihnen Prepolymere erzeugt werden und / oder zur Verknüpfung der Prepolymere verwendet werden. Die Komponenten A), B), ggf. C) und ggf. D) werden jeweils unabhängig voneinander ausgewählt. Die Isocyanat-Komponenten A) und ggf. C) werden mit den Isocyanatreaktiven-Komponenten B) und ggf. D) in einem molaren Verhältnis von Isocyanat-Komponente : Isocyanatreaktiver-Komponente im Bereich von 1,0 : 0,95 bis 0,95 : 1,0 eingesetzt.

Im Rahmen der vorliegenden Erfindung wird unter einem "Hydroxy-terminierten Prepolymer" ein Prepolymergemisch verstanden, in dem mindestens 90 Anzahl-% der Molekülenden eine Hydroxygruppe aufweisen und die verbleibenden 10 Anzahl-% Molekülenden weitere Hydroxy-Gruppen, NCO-Gruppen oder nicht-reaktive Gruppen aufweisen. Unter einer "nicht-reaktiven Gruppe" wird im Rahmen der vorliegenden Erfindung eine Gruppe verstanden, die unter den erfindungsgemäßen Reaktionsbedingungen weder mit NCO-Gruppen, noch mit OH-Gruppen in einer Zeiteinheit reagiert, die der erfindungsgemäßen Reaktionszeit entspricht. Eine nicht-reaktive Gruppe kann beispielsweise aus einer reaktiven NCO-Gruppe oder OH-Gruppe durch Reaktion mit geeigneten Reaktionspartnern (Kettenabbrecher) in eine nicht-reaktive Gruppe umgewandelt werden. Als Kettenabbrecher eignen sich alle monofunktionellen Verbindungen, die unter den erfindungsgemäßen Reaktionsbedingungen entweder mit einer Isocyanatgruppe oder mit einer Hydroxygruppe reagieren, beispielsweise Mono-Alkohole, wie Methanol, Mono-Amine, wie Diethylamin und Monoisocyanate, wie Butylisocyanat. Das Hydroxy-terminierte Prepolymer kann beispielsweise an einem Molekülende eine Hydroxygruppe aufweisen und an dem oder den anderen Molekülenden beispielsweise eine Alkylgruppe. Wenn im Rahmen der vorliegenden Erfindung von einem Hydroxy-terminierten Prepolymer gesprochen wird, ist hiermit auch immer ein Gemisch aus dem mindestens einen Hydroxy-terminierten Prepolymer und einem nicht-reaktiv terminierten Prepolymer umfasst. Ferner kann es sich aufgrund der Statistik der Reaktion abgesehen von Nebenreaktionen auch um ein Gemisch von nicht Hydroxy-terminierten bis zu zweifach Hydroxy-terminierten Prepolymeren handeln. Vorzugsweise handelt es sich überwiegend um ein Gemisch von zweifach Hydroxy-terminierten Prepolymeren. Erfindungsgemäß kann es sich bei dem mindestens einen Hydroxy-terminierten Prepolymer auch um ein Gemisch von mindestens einem Hydroxy-terminierten Prepolymer und mindestens einem nicht-reaktiv terminierten Prepolymer handeln.

Im Rahmen der vorliegenden Erfindung wird unter einem "nicht-reaktiv terminierten Prepolymer" ein Prepolymer verstanden, bei dem die reaktiven Gruppen (NCO-Gruppen oder OH-Gruppen) durch Reaktion mit geeigneten Reaktionspartnern (Kettenabbrechern) in chemische Gruppen umgewandelt wurden, die unter den genannten Reaktionsbedingungen weder mit NCO-Gruppen, noch mit OH-Gruppen reagieren. Als Kettenabbrecher eignen sich beispielsweise Mono-Alkohole wie Methanol, Mono-Amine wie Diethylamin und Monoisocyanate wie Butylisocyanat. Der molare Anteil der Kettenabbrecher kann beispielsweise von 0,001 mol-% bis 2 mol-% und bevorzugt von 0,002 mol-% bis 1 mol-% betragen, jeweils bezogen auf die Gesamtstoffmenge der entsprechenden Monomerkomponente.

Das mindestens eine Hydroxy-terminierte Prepolymer kann beispielsweise aus der Gesamtmenge der aliphatischen Diole B) und einer ersten Teilmenge der aliphatischen Diisocyanate A) gebildet werden. In einem oder mehreren darauffolgenden Schritten können dann weitere Teilmengen der aliphatischen Diisocyanate A), d.h. eine zweite, dritte etc. Teilmenge hinzugefügt werden, um weitere erfindungsgemäße, im Mittel höher molekulare, Hydroxy-terminierte Prepolymere aufzubauen. Alternativ kann das mindestens eine Hydroxy-terminierte Prepolymer beispielsweise aus einer ersten Teilmenge der aliphatischen Diole B) und einer ersten Teilmenge der aliphatischen Diisocyanate A) gebildet werden. In einer oder mehreren darauffolgenden Verfahrensstufen können dann weitere Teilmengen der aliphatischen Diole B) und der aliphatischen Diisocyanate A) zugeführt werden, um weitere im Mittel höher molekulare Hydroxy-terminierte Prepolymere aufzubauen.

Die Umsetzung kann mit oder ohne Katalysator durchgeführt werden, allerdings ist eine katalysierte Umsetzung weniger bevorzugt. Als Katalysatoren eigenen sich die oben aufgeführten Katalysatoren. Die Umsetzung kann lösungsmittelfrei oder in Lösung erfolgen. In Lösung bedeutet, dass zumindest einer der Reaktionspartner in einem Lösungsmittel gelöst ist, bevor er zu dem anderen Reaktionspartner gegeben wird. Vorzugsweise wird die Umsetzung lösungsmittelfrei durchgeführt. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt.

Die Temperaturen zur Bildung des mindestens einen Prepolymers, vorzugsweise Hydroxy-terminierten Prepolymers, durch das erfindungsgemäße Verfahren können in Abhängigkeit von den eingesetzten Verbindungen ausgewählt werden. Bevorzugt ist hierbei jedoch, wenn die Umsetzung bei Temperaturen von $\geq 40\,°C$ bis $\leq 260\,°C$, vorzugsweise von $\geq 60\,°C$ bis $\leq 250\,°C$, bevorzugter von $\geq 100\,°C$ bis $\leq 240\,°C$, besonders bevorzugt von $\geq 120\,°C$ bis $\leq 220\,°C$ durchgeführt wird. Dabei wird toleriert, dass das Produkt bei der Umsetzung kurzfristige (< 60 Sekunden) Abweichungen der Reaktionstemperatur von den oben genannten Bereichen erfährt.

Das so erzeugte mindestens eine Prepolymer, vorzugsweise Hydroxy-terminierte Prepolymer, kann beispielsweise in mindestens einer weiteren Verfahrensstufe mit mindestens einem Kettenverlängerer zum thermoplastischen Polyurethanpolymer umgesetzt werden. Dabei können entweder die Gesamtmengen der beiden Komponenten, d.h. des erzeugten mindestens einen Prepolymers, vorzugsweise Hydroxy-terminierten Prepolymers, und des mindestens einen Kettenverlängerers, miteinander in einer Verfahrensstufe umgesetzt werden oder es wird eine Teilmenge der einen Komponenten mit der Gesamtmenge oder einer Teilmenge der anderen Komponente in mehreren Verfahrensstufen umgesetzt. Als Kettenverlängerer können alle oben genannten Polyisocyanate eingesetzt werden. Vorzugsweise werden ein oder mehrere aliphatische Diisocyanate mit einem Molekulargewicht von 140 g/mol bis 170 g/mol als Kettenverlängerer eingesetzt.

Soll das erfindungsgemäße thermoplastische Polyurethanpolymer beispielsweise aromatische Gruppen aufweisen, so können diese beispielsweise durch die Verwendung von aromatischen Diisocyanaten als Kettenverlängerer eingeführt werden. Auch ist es beispielsweise möglich, aromatische Prepolymere zu erzeugen und diese mit den aliphatischen Prepolymeren zu mischen um erfindungsgemäße Polyurethanpolymere mit aromatischen Gruppen aufzubauen.

Die Umsetzung der Komponenten A), B), ggf. C) und ggf. D) kann mit oder ohne Katalysator durchgeführt werden, allerdings ist eine katalysierte Umsetzung weniger bevorzugt. Als Katalysatoren eigenen sich die oben aufgeführten Katalysatoren. Die Umsetzung kann lösungsmittelfrei oder in Lösung erfolgen. In Lösung bedeutet, dass zumindest einer der Reaktionspartner in einem Lösungsmittel gelöst ist, bevor er zu dem anderen Reaktionspartner gegeben wird. Vorzugsweise wird die Umsetzung lösungsmittelfrei durchgeführt. Dabei ist das Verfahren im Sinne der vorliegenden Erfindung noch als lösungsmittelfrei anzusehen, wenn der Gehalt des Lösungsmittels bis 1 Gew.-%, vorzugsweise bis 0,1 Gew.-%, noch bevorzugter bis 0,01 Gew.-% bezogen auf das Gesamtgewicht der Reaktionsmischung beträgt.

Die Temperaturen zur Bildung des erfindungsgemäßen thermoplastischen Polyurethanpolymers durch Umsetzung des mindestens einen Prepolymers, vorzugsweise Hydroxy-terminierten Prepolymers, mit dem mindestens einen Kettenverlängerer im erfindungsgemäßen Verfahren können in Abhängigkeit von den eingesetzten Verbindungen ausgewählt werden. Bevorzugt ist hierbei jedoch, wenn die Umsetzung bei Temperaturen von $\geq 60\,°C$ bis $\leq 260\,°C$, vorzugsweise von $\geq 80\,°C$ bis $\leq 250\,°C$, besonders bevorzugt von $\geq 100\,°C$ bis $\leq 245\,°C$ und ganz besonders bevorzugt von $\geq 120\,°C$ bis $\leq 240\,°C$ durchgeführt wird. Dabei wird toleriert, dass das Produkt bei der Umsetzung kurzfristige (< 60 Sekunden) Abweichungen der Reaktionstemperatur von den oben genannten Bereichen erfährt.

Neigt das mindestens eine Prepolymer, vorzugsweise Hydroxy-terminierte Prepolymer, bzw. das thermoplastische Polyurethanpolymer zur Kristallisation und besitzt es einen Schmelzpunkt, so wird die Reaktion bevorzugt in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes des mindestens einen Prepolymers, vorzugsweise Hydroxy-terminierten Prepolymers, bzw. des thermoplastischen Polyurethans durchgeführt.

Die Verfahrensstufen zur Erzeugung des erfindungsgemäßen thermoplastischen Polyurethanpolymers kann in einem einzelnen Apparat oder in einer Vielzahl von Apparaten durchgeführt werden. Beispielsweise kann die Erzeugung des Prepolymers, vorzugsweise Hydroxy-terminierten Prepolymers, zunächst in einem ersten Apparat (z.B. Loop-Reaktor oder kühlbarer Mischer) durchgeführt werden und dann das Reaktionsgemisch in einen weiteren Apparat (z.B. Extruder oder andere Hochviskosreaktoren) überführt werden, um das erfindungsgemäße thermoplastische Polyurethanpolymer zu erzeugen.

In einer bevorzugten Ausführungsform werden das mindestens eine aliphatische Diol B) und das mindestens eine aliphatische Diisocyanat A) in mindestens einem Statikmischer, Dynamikmischer oder Mischer-Wärmeübertrager zum mindestens einen Hydroxy-terminierten Prepolymer umgesetzt.

In einer weiteren bevorzugten Ausführungsform werden das mindestens eine aliphatische Diol B) und das mindestens eine aliphatische Diisocyanat A) in einem Loop-Reaktor (auch Schleifenreaktor genannt) zum mindestens einen Hydroxy-terminierten Prepolymer umgesetzt.

Zur Umsetzung des mindestens einen Prepolymers, vorzugsweise Hydroxy-terminierten Prepolymers, mit dem mindestens einen Kettenverlängerer zum thermoplastischen Polyurethanpolymer ist es erforderlich, das erfindungsgemäße Verfahren auf den exponentiellen Viskositätsanstieg in dieser Phase abzustimmen. Dies wird erreicht indem bevorzugt Apparate eingesetzt werden, in denen das Reaktionsprodukt mit mechanischer Energie aktiv bewegt wird. Besonders bevorzugt werden Apparate eingesetzt, bei denen sich die Werkstoffoberflächen gegenseitig - bis auf Spiele - abreinigen. Solche Apparate sind beispielsweise gleichlaufende Mehrwellenextruder wie Doppel- oder Vierwellenextruder oder Ringextruder, gegenläufige Mehrwellenextruder, Ko-Kneter oder Planetwalzenextruder und Rotor-Stator Systeme. Weitere geeignete Apparate sind ein- oder zweiwellige großvolumige Kneter. Die zweiwelligen großvolumigen Kneter können gleich- oder gegenläufige sein. Beispiele für großvolumige Kneter sind beispielsweise CRP (Fa. List Technology AG), Reacom (Buss-SMS-Canzler GmbH), Reasil (Buss-SMS-Canzler GmbH), KRC kneader (Kurimoto, Ltd). In einer bevorzugten Ausführungsform wird mindestens ein solcher Apparat mit mindestens einem Statikmischer, Dynamikmischer, Loop-Reaktor oder Mischer-Wärmeübertrager kombiniert, wobei in dem Statikmischer, Dynamikmischer, Loop-Reaktor oder Mischer-Wärmeübertrager aus dem mindestens einen aliphatisch Diol B) und dem mindestens einen aliphatischen Diisocyanat A) das mindestens eine Prepolymer, vorzugsweise Hydroxy-terminierten Prepolymer, erzeugt wird. Neigt eine der Komponenten der Reaktionsmischung zur Kristallisation, so wird die Temperatur der Mischung durch geeignete Maßnahmen in einem Temperaturbereich von 30 K unterhalb bis 150 K oberhalb des Schmelzpunktes, bevorzugt von 15 K unterhalb bis 100 K oberhalb, besonders bevorzugt von 10 K unterhalb bis 70 K oberhalb des Schmelzpunktes der bei der höchsten Temperatur schmelzenden Komponente beziehungsweise des bei der höchsten Temperatur schmelzenden Reaktionsproduktes der Komponenten gehalten. Dabei ist die Verweilzeit im Statikmischer, Dynamikmischer, Loop-Reaktor oder Mischer-Wärmeübertrager bevorzugt so kurz, dass der Viskositätsanstieg (bedingt durch die Polyadditions-Reaktion der reaktiven Komponenten miteinander) nicht zu einer Verstopfung des Statikmischers, Dynamikmischers, Loop-Reaktors oder Mischer-Wärmeübertragers führt oder ein Druckaufbau auf < 50 bar, bevorzugt < 30 bar, besonders bevorzugt < 20 bar und ganz besonders bevorzugt < 10 bar begrenzt wird, und das entstehende Gemisch einem Apparat zugeführt wird, der der obigen Liste entspricht.

In einer weiteren bevorzugten Ausführungsform findet die Umsetzung des mindestens einen Prepolymers, vorzugsweise Hydroxy-terminierten Prepolymers, mit dem mindestens einen Kettenverlängerer in einem Extruder statt.

In einer weiteren bevorzugten Ausführungsform findet die Herstellung des erfindungsgemäßen thermoplastischen Polyurethanpolymers in einer Kombination eines Loop-Reaktors mit einem Extruder statt.

In einer weiteren bevorzugten Ausführungsform findet die Herstellung des erfindungsgemäßen thermoplastischen Polyurethanpolymers in einer Kombination eines Statikmischers, Dynamikmischers, Loop-Reaktors oder Mischer-Wärmeübertragers mit einem beheiztem Transportband statt.

Im Anschluss an die Umsetzung zum erfindungsgemäßen thermoplastischen Polyurethanpolymer wird dieses in eine Handelsform gebracht, typischerweise Granulat. Nach der Umsetzung in der finalen Verfahrensstufe liegt das erfindungsgemäße thermoplastische Polyurethanpolymer im schmelzflüssigen Zustand vor, wird im Schmelzezustand zerkleinert und durch Abkühlung zum Erstarren gebracht oder zuerst durch Abkühlen zum Erstarren gebracht und anschließend zerkleinert. Dies kann beispielsweise mit den dem Fachmann bekannten Methoden der Stranggranulierung, der Unterwasser-Stranggranulierung, der Wasserringgranulierung und der Unterwassergranulierung geschehen. Die Abkühlung erfolgt bevorzugt mit Wasser; auch eine Abkühlung mit Luft oder anderen Medien ist möglich.

Nach Umsetzung auf einem Bandreaktor kann das erfindungsgemäße thermoplastische Polyurethanpolymer auch abgekühlt, gebrochen und gemahlen werden.

Das so erhaltene erfindungsgemäße thermoplastische Polyurethanpolymer kann erfindungsgemäß in einem Feststoffmischprozess gemischt und in einem weiteren Extruder aufgeschmolzen und wieder granuliert werden. Dies ist vor allem dann bevorzugt, wenn erfindungsgemäße thermoplastische Polyurethanpolymer nach dem Bandreaktor gekühlt und gemahlen wird, weil dieser Vorgang auch die Produktform homogenisiert.

Das erfindungsgemäße Herstellungsverfahren kann kontinuierlich oder diskontinuierlich, d.h. als Batch-Verfahren oder Semi-Batch-Verfahren durchgeführt werden.

Die nach dem erfindungsgemäßen Verfahren hergestellte erfindungsgemäße thermoplastische Polyurethanpolymer kann zu Formkörpern, wie Extrusionsartikeln und Spritzgussartikeln, Folien, Thermoplastschäumen, Fasern oder Pulver verarbeitet werden.

In einer bevorzugten Ausführungsform des erfindungsgemäßen Verfahrens zur Herstellung des erfindungsgemäßen thermoplastischen Polyurethanpolymers werden in einem ersten Schritt zumindest ein oder mehrere aliphatische Diisocyanate A) mit einem Molekulargewicht von 140 g/mol bis 170 g/mol mit ein oder mehreren aliphatischen Diolen B) mit einem Molekulargewicht von 62 g/mol bis 120 g/mol zu mindestens einem Prepolymer umgesetzt, vorzugsweise zu mindestens einem Hydroxy-terminierten Prepolymer, und das im ersten Schritt erhaltene mindestens eine Prepolymer wird in einem zweiten Schritt mit mindestens einem Kettenverlängerer, vorzugsweise mindestens einem Diisocyanat, zum erfindungsgemäßen thermoplastischen Polyurethanpolymer umgesetzt.

Als Kettenverlängerer können abhängig vom gebildeten Prepolymer organische Diole, Diamine und Polyisocyanate eingesetzt werden. Im Fall von NCO-terminierten Prepolymeren eignen sich beispielsweise organische Diole und Diamine mit jeweils einem Molekulargewicht von 60 g/mol bis 120 g/mol. Bevorzugt sind als Kettenverlängerer aliphatische Diole mit einem Molekulargewicht von 62 g/mol bis 120 g/mol, wie beispielsweise 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol, 1,2-Ethandiamin und 1,3-Propandiamin. In einer bevorzugten Ausführungsform des erfindungsgemäßen Verfahrens zur Herstellung des thermoplastischen Polyurethanpolymers wird 1,4-Butandiol als Kettenverlängerer eingesetzt. Im Fall von Hydroxy-terminierten Prepolymeren eigenen sich beispielsweise Polyisocyanate mit einem Molekulargewicht von 140 g/mol bis 170 g/mol, vorzugsweise aliphatischen Diisocyanate mit einem Molekulargewicht von 140 g/mol bis 170 g/mol wie beispielsweise 1,4-Diisocyanatobutan, 1,5-Diisocyanatopentan, 1,6-Diisocyanatohexan und 2-Methyl-1,5-diisocyanatopentan. In einer bevorzugten Ausführungsform des erfindungsgemäßen Verfahrens zur Herstellung des thermoplastischen Polyurethanpolymers wird 1,6-Diisocyanatohexan und / oder 1,5-Diisocyanatopentan als Kettenverlängerer eingesetzt.

Gegenstand der Erfindung sind auch Zusammensetzungen die mindestens ein erfindungsgemäßes thermoplastisches Polyurethanpolymer und mindestens ein Additiv oder ein weiteres thermoplastisches Polymer umfassen.

Bei dem Additiv kann es sich beispielsweise um im Bereich der Thermoplasttechnologie gängige Additive wie Farbstoffe, Füllstoffe, Verarbeitungshilfsmittel, Weichmacher, Nucleierungsmittel, Stabilisatoren, Flammschutzmittel, Entformungsmittel oder verstärkende Additive handeln. Nähere Angaben über die genannten Additive sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R. Gächter u. H. Müller (Hanser Verlag München 1990) oder der DE-A 29 01 774 zu entnehmen. Selbstverständlich kann es ebenfalls von Vorteil sein, mehrere Additive mehrerer Typen zu verwenden.

Geeignete thermoplastische Polymere, die Bestandteil der erfindungsgemäßen Zusammensetzung sein können, sind beispielsweise Polystyrole, Polyamide, Polyethylen, Polypropylen, Polyacrylate, Polymethacrylate, Polyurethane oder auch Acrylnitril-Butadien-Styrol-Copolymere (ABS).

Aus den erfindungsgemäßen Zusammensetzungen können thermoplastische Formmassen hergestellt werden. Ein weiterer Gegenstand der Erfindung ist daher eine thermoplastische Formmasse, welche mindestens eine erfindungsgemäße Zusammensetzung umfasst. Die erfindungsgemäßen thermoplastischen Formmassen können beispielsweise hergestellt werden, indem man die jeweiligen Bestandteile der Zusammensetzungen in bekannter Weise vermischt und bei Temperaturen von bevorzugt 180 °C bis 320 °C, besonders bevorzugt bei 200 °C bis 300 °C in üblichen Aggregaten wie beispielsweise Innenknetern, Extrudern und Doppelwellenschnecken schmelzcompoundiert und schmelzextrudiert. Dieser Prozess wird im Rahmen dieser Anmeldung allgemein als Compoundieren bezeichnet.

Unter Formmasse wird also das Produkt verstanden, das erhaltend wird, wenn die Bestandteile der Zusammensetzung schmelzcompoundiert oder schmelzextrudiert werden.

Die Vermischung der einzelnen Bestandteile der Zusammensetzungen kann in bekannter Weise sowohl sukzessive als auch simultan erfolgen, und zwar sowohl bei etwa 20°C (Raumtemperatur) als auch bei höherer Temperatur. Das bedeutet, dass beispielsweise manche der Bestandteile über den Haupteinzug eines Extruders dosiert und die restlichen Bestandteile über einen Seitenextruder später im Compoundierverfahren zugeführt werden können.

Gegenstand der Erfindung ist auch ein Verfahren zur Herstellung der erfindungsgemäßen Formmassen.

Die erfindungsgemäßen thermoplastischen Formmassen können zur Herstellung von Formkörpern, Folien und / oder Fasern jeder Art verwendet werden. Ein weiterer Gegenstand der Erfindung ist daher ein Formkörper, eine Folie und / oder eine Faser, wobei der Formkörper, die Folie oder die Faser mindestens ein erfindungsgemäßes thermoplastisches Polyurethanpolymer, mindestens eine erfindungsgemäße thermoplastische Formmasse oder mindestens eine erfindungsgemäße Zusammensetzung umfasst. Diese können beispielsweise durch Spritzguss, Extrusion, Blasformverfahren und / oder Schmelzspinnen hergestellt werden. Eine weitere Form der Verarbeitung ist die Herstellung von Formkörpern durch Tiefziehen aus zuvor hergestellten Platten oder Folien.

Es ist auch möglich, die Bestandteile der Zusammensetzungen direkt in eine Spritzgussmaschine oder in ein Extrusionsaggregat zu dosieren und zu Formkörper zu verarbeiten.

Ein weiterer Gegenstand der Erfindung ist die Verwendung eines erfindungsgemäßen thermoplastischen Polyurethanpolymers zur Herstellung einer Zusammensetzung oder einer thermoplastischen Formmasse.

Ein weiterer Gegenstand der Erfindung ist die Verwendung einer erfindungsgemäßen Zusammensetzung zur Herstellung einer thermoplastischen Formmasse.

Ein weiterer Gegenstand der Erfindung ist die Verwendung eines erfindungsgemäßen thermoplastischen Polyurethanpolymers, einer erfindungsgemäßen thermoplastischen Formmasse oder einer erfindungsgemäßen Zusammensetzung zur Herstellung eines Formkörpers, einer Folie und / oder einer Faser.

Die Erfindung soll anhand der nachfolgenden Beispiele näher erläutert werden, ohne sie jedoch hierauf zu beschränken.

Zur näheren Erläuterung der Erfindung dienen die nachfolgend erläuterten Abbildungen und Beispiele, wobei diese lediglich Anschauungsbeispiele für bestimmte Ausführungsformen darstellen, nicht jedoch eine Beschränkung des Umfangs der Erfindung. Es zeigen im Einzelnen:

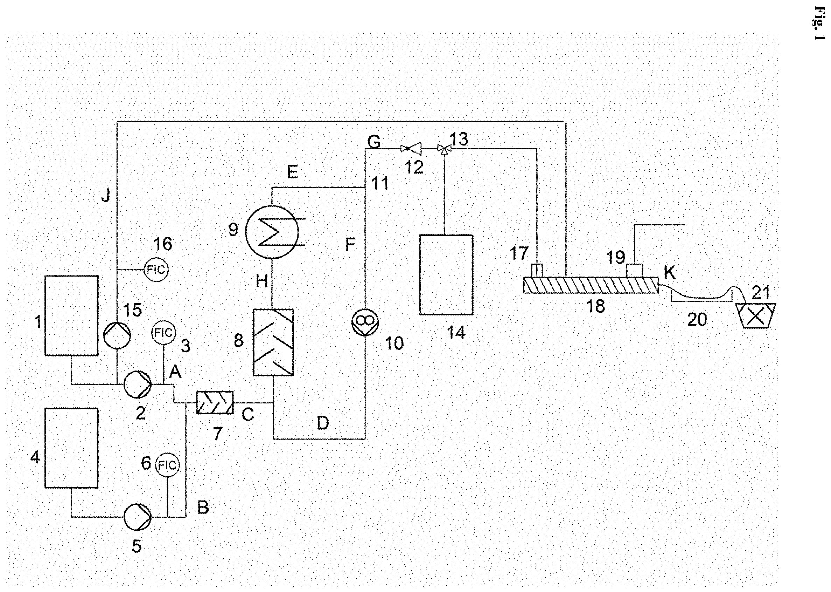

**Abbildung** 1: Bevorzugte Ausführungsform eines Aufbaus zur Durchführung einer zweistufigen kontinuierlichen Herstellung eines erfindungsgemäßen thermoplastischen Polyurethans, durch Reaktionsfolge in Schleifenreaktor und Extruder.

## Beispiele

Alle Prozentangaben beziehen sich, soweit nichts Anderslautendes vermerkt, auf das Gewicht.

Die zur Zeit der Versuchsdurchführung herrschende Umgebungstemperatur von 25 °C wird als RT (Raumtemperatur) bezeichnet.

## Verwendete Rohstoffe:

1,6-Hexamethylendiisocyanat (HDI, Reinheit ≥ 99 Gew.-%) wurde von der Covestro AG bezogen.

1,4-Butandiol (BDO, Reinheit ≥ 99 Gew.-%) wurde von der Firma Ashland bezogen.

Hexafluorisopropanol wurde von der Firma flurochem in einer Reinheit von 99,9 Gew.-% bezogen.

Kaliumtrifluoracetat bezogen von der Firma Aldrich, in einer Reinheit von 98 Gew.-%.

**Gelpermeationschromatographie:**

Die Molmassen der Polymere wurden mit Hilfe einer Gelpermeationschromatographie (GPC) bestimmt. Dazu wurde die zu vermessende Probe in einer Lösung von 3 g Kaliumtrifluoracetat in 400 Kubikzentimeter Hexafluorisopropanol aufgelöst (Probenkonzentration ca. 2 mg/ Kubikzentimeter). Die jeweiligen GPCs wurden mit folgenden Komponenten bei einer Flussrate von 1 Kubikzentimeter /Minute gemessen:

| | |
|---|---|
| Pumpe: | HPLC-Pumpe 515 (Waters GmbH) |
| Detektor: | Smartline RI-Detektor 2300 (Knauer Wissenschaftliche Geräte |
| Säulen: | 1 Vorsäule, 1000 Ä PSS PFG 7 μm, 300 Ä PSS PFG 7 μm, 100 Å PSS PFG 7 μm in der angegebenen Reihenfolge |
| Entgasung: | Degaser PSS (Polymer Standards Service GmbH) |
| Inj ektionsvolumen: | 100 Mikroliter |
| Temperatur: | 23 °C - 25 °C |
| Molmassen-Standard: | Polymethylmethacrylat-Standard-Kit (PSS Polymer Standards Service GmbH) |

**Berechnung von $\overline{M}_z$ und $\overline{M}_{peak}$:**

Das Zentrifugenmittel der Molmasse ($\overline{M}_z$) wurde aus den durch die Messung der Gelpermeations-Chromatografie erhaltenen Daten mit Hilfe der folgenden Gleichung errechnet:

$$\overline{M}_z = \frac{\sum_i n_i M_i{}^3}{\sum_i n_i M_i{}^2} \quad \text{in g/mol}$$

Abkürzungen:

$M_i$ ist die molare Masse der Polymere der Fraktion $i$, so dass $M_i < M_{i+1}$ für alle $i$, in g/mol

$n_i$ ist die Stoffmenge des Polymers der Fraktion $i$, in mol

$n$ die gesamte Stoffmenge, $n = \sum_i n_i$, in mol

$m_i$ die Masse des Polymers der Fraktion $i$, $m_i = n_i M_i$, in g

$m_a$ die Gesamtmasse des Polymers, $m_g = \sum_i m_i$ in g

$w_i = \frac{m_i}{m_g}$ der Massenanteil des Polymers der Fraktion i

Bekanntlich werden Molmassenverteilungen typischerweise logarithmisch über der Molmasse aufgetragen, wobei die Massenanteile mit der Molmasse skaliert werden, damit die Flächengleichheit der Auftragung gewahrt wird..
Die Peak-Molmasse, $\overline{M}_{peak}$ ist ergibt sich aus dem Maximum dieser logarithmischen Auftragung zu $\overline{M}_{peak} = M_k$, so dass $w_k M_k = \max(w_i M_i)$ für alle $i$, in g/mol

**Differential Scanning Calorimetry (DSC)**

Schmelzpunkte und Glasübergangspunkte wurde mittels DSC (Differential Scanning Calorimetry) mit einem Mettler DSC 12E (Mettler Toledo GmbH, Gießen, DE) entsprechend DIN EN 61006 (November 2004) bestimmt. Eine Kalibrierung erfolgte durch die Temperatur des Schmelz-Onsets von Indium und Blei. Es wurden 10 mg Substanz in Normalkapseln eingewogen. Die Messung erfolgte durch drei Aufheizungen von -50 °C bis +200 °C bei einer Heizrate von 20 K/min mit anschließender Abkühlung mit einer Kühlrate von 20 K/min. Die Kühlung erfolgte durch flüssigen Stickstoff. Als Spülgas wurde Stickstoff verwendet. Die angegebenen Werte basieren jeweils auf der Auswertung der 2. Aufheizkurve.

**Herstellung der Probenkörper:**

Zur Herstellung der Probenkörper (80 mm × 10 mm × 4 mm-Stäbe) wurde Polymergranulat in einem "Mikro Compounder Model 2005" der Firma DSM Xplore aufgeschmolzen. Die Verarbeitungstemperatur wurde auf 195 °C bei 100 Umdrehungen pro Minute eingestellt. Nach einer Verweilzeit im Extruder von 2 Minuten, wurde die Schmelze in die "Micro 10cc Injection Moulding Maschine" der Firma DSM Xplore überführt. Die Spritzgussform wurde auf 100 °C temperiert. Der Druck beim Spritzgießen wurde auf 6 bar (10 Sekunden) eingestellt. Der Nachdruck betrug 9 bar (10 Sekunden). Die spritzgegossenen Biegestäbe wurden nach 20 Sekunden manuell entformt.

**Bestimmung der maximalen Biegespannung:**

Die Biegespannung wurde an den oben beschriebenen Probekörpern bestimmt, durch einen langsamen Dreipunkt-Biegeversuch bei Raumtemperatur nach DIN EN ISO 178 (September 2013), durchgeführt mit einer Universalprüfmaschine 5566 der Firma Instron mit einer Geschwindigkeit von 5 mm/Minute, einem Finnenradius von 5 mm und einer Auflagedistanz von 64 mm.

**Herstellung des Vergleichsbeispiels 1:**

In einem Rührkessel (250 ml) wurden bei 23 °C 53,02 g 1,4-Butandiol mit 96,92 g HDI verrührt. Anschließend wurde das Reaktionsgefäß mit Stickstoff gespült und unter Rühren (170 Umdrehungen pro Minute, U/min) auf 90 °C geheizt. Nachdem die Innentemperatur des Rührkessels auf 90 °C gestiegen war, wurde die Heizung entfernt. Im Verlauf der nächsten 5 Minuten stieg die Innentemperatur auf 240 °C. Der Versuch wurde beendet als die Reaktionsmischung nicht mehr gerührt werden konnte, da sich das Produkt verfestigt hatte.

**Herstellung des Vergleichsbeispiels 2:**

In einem Rührkessel (250 ml) wurden 53,02 g 1,4-Butandiol für 30 Minuten unter Rühren (170 U/min) und Stickstoffeinleitung auf 90 °C geheizt. Anschließend wurden über einen Zeitraum von 45 Minuten 96,98 g HDI kontinuierlich zu dem Butandiol dosiert. Hierbei wurde die Temperatur des Reaktionsgemisches konstant um 4 °C pro Minute erhöht, bis eine Temperatur von 190 °C erreicht wurde (25 Minuten). Sobald eine Produkttemperatur von 190 °C erreicht wurde, wurde die Geschwindigkeit des Rührers auf 300 U/min erhöht. Die Temperatur im Rührkessel wurde konstant zwischen 190 °C und 200 °C gehalten.
Nach Ende der HDI Dosierung wurde die Schmelze weitere 5 Minuten gerührt. Anschließend wurde sie im heißen Zustand in eine Aluminiumform gegossen.

**Herstellung der erfinderischen Beispiele 1-5 (Abbildung 1):**

Aus einer 250 - Liter - Vorlage für 1,6-Hexamethylendiisocyanat 1 wurde mit Hilfe einer Zahnringpumpe 2 (Firma HNP, MZR 7255) ein 1,6-Hexamethylendiisocyanat -Strom A zu einem Statikmischer 7 gefördert. Der Durchsatz des 1,6-Hexamethylendiisocyanat -Stroms A wurde mittels eines Massedurchflussmessers 3 (Firma Bronkhorst, Mini Cori-Flow M1X, max. Durchfluss 12 kg/h) gemessen. Aus einer 250 - Liter - Vorlage für 1,4-Butandiol 4 wurde mit Hilfe einer Zahnringpumpe 5 (Firma HNP, MZR 7205) ein 1,4-Butandiol-Strom B zum Statikmischer 7 gefördert. Der Durchsatz des 1,4-Butandiol-Stroms wurde mittels eines Massedurchflussmessers 6 (Firma Bronkhorst, Mini Cori-Flow M1X, max. Durchfluss 8 kg/h) gemessen. Die Temperatur des 1,6-Hexamethylendiisocyanats betrug dabei Raumtemperatur. Die Temperatur des 1,4-Butandiols betrug 40 °C. In dem Statikmischer 7 (Sulzer SMX, Durchmesser 6 mm, Verhältnis von Länge zu Durchmesser L/D = 10) wurden der 1,6-Hexamethylendiisocyanat-Strom A und der 1,4-Butandiol-Strom B miteinander gemischt. Dies ist der Strom C.
Der gemischte und dispergierte Strom C wird in einem Umlauf mit einem umlaufenden Polymerstrom D in einem Statikmischer 8 (Statikmischer äquivalent zu Sulzer SMX, Innendurchmesser 34 mm, L/D=20) zu einem Strom H gemischt. Die Temperatur des Stromes D betrug 182 °C.
Der gemischte und teilweise schon reagierte Strom H wurde in einen temperierbaren statischen Mischer 9 geführt. Dort lief die Reaktion zum großen Teil ab und die entstehende Reaktionswärme wurde abgeführt. Der temperierbare statische Mischer 9 war ähnlich aufgebaut wie ein Sulzer SMR-Reaktor mit innenliegenden, gekreuzten Rohren. Er hatte ein Innenvolumen von 1,9 Litern, eine Wärmeaustauschfläche von 0,44 Quadratmeter. Er war mit Wärmeträgeröl beheizt/gekühlt. Die Heizmitteltemperatur am Eintritt betrug 180 °C.

Aus dem temperierbaren statischen Mischer 9 trat der Produktstrom als weitgehend ausreagierter Strom E mit einer Temperatur von 183 °C aus. Der Strom E wurde an einer Verzweigung 11 in zwei Teilströme F und G aufgespalten. Der Druck des Teilstrom F wurde an einer Zahnradpumpe 10 erhöht. Der Teilstrom F wurde nach der Pumpe zum oben erwähnten Teilstrom D.

Die Zahnradpumpe 10 (Firma Witte Chem 25,6-3), hatte ein Volumen pro Umdrehung von 25,6 Kubikzentimeter und eine Drehzahl von 50 pro Minute.

Der ganze Umlauf war voll gefüllt, und das Polymer zum großen Teil inkompressibel. Daher war der Massenstrom des Stroms G identisch mit dem des Stroms C. Der Strom G bestand aus Oligomer.

Der ganze Umlauf bestand aus doppelwandig ausgeführten Rohrleitungen und Apparaten, die mit Thermoöl beheizt waren. Die Heizmitteltemperatur betrug 182 °C.

Hinter dem Druckhalteventil 12 wurde der Strom G an einem Dreiwegeventil 13 vorbeigeführt. Dort konnte es bei An- und Abfahren oder bei Störungen auf einen Abfallbehälter 14, ein offenes 60-Liter-Metallfass mit Absaugung, gefahren werden. Im regulären Betrieb wurde der Strom G auf einen Extruder 18 geleitet.

Aus der 1,6-Hexamethylendiisocyanat-Vorlage 1 wurde mit Hilfe einer Mikrozahnringpumpe 15 (MZR 6355 der Firma HNP) ein 1,6-Hexamethylendiisocyanat-Strom J entnommen. Der Durchsatz des 1,6-Hexamethylendiisocyanat-Stroms J wurde mittels eines Massedurchflussmessers 16 (Firma Bronkhorst, Mini Cori-Flow, M1X, maximaler Durchfluss 2 kg/h) gemessen. Die Temperatur des 1,6-Hexamethylendiisocyanat-Stroms J betrug ebenfalls Raumtemperatur. Dieser Strom wurde ebenfalls auf den Extruder 18 geleitet.

Der Extruder 18 war eine ZSK 26 MC der Firma Coperion, der bei Temperaturen von 200 °C und einer Drehzahl von 66 Umdrehungen pro Minute betrieben wurden. Auf diesem Extruder wurde der Strom G über eine Entlüftung 17, die bei ca. 1 mbar Unterdruck gegenüber dem Umgebungsdruck betrieben wurde, von eventuell mit den Stoffströmen A und B eingeschleppten Inertgasen und möglichen flüchtigen Reaktionsprodukten befreit. Stromab von der Zugabe des Oligomerstroms G wurde der 1,6-Hexamethylendiisocyanat-Strom J zugegeben und die Reaktion zum Polymer durchgeführt. Vor Ende des Extruders wurde der entstehende Polymerstrom über eine Entgasung 19 noch von flüchtigen Bestandteilen befreit. Der Druck in dieser Entgasung betrug 200 mbar unter Umgebungsdruck. Der Polymerstrom K wurde durch zwei Düsen ausgepresst, in einem mit deionisierten Wasser (VE-Wasser) gefüllten Wasserbad abgekühlt und durch einen Granulator 21 zu Granulat zerschnitten.

Beschreibung der verwendeten Extruderkonfigurationen:

Wenn in der nachfolgenden Beschreibung von "Elementen" die Rede ist, so kann es sich um ein oder mehrere Elemente handeln. Dem Fachmann ist klar, dass Extruderelemente bei gleicher Außenkontur die gleiche Aufgabe erfüllen, unabhängig von der Stückelung.

Extruderkonfiguration für die erfinderischen Beispiele 1-3:

Eine Dosierung mit Entgasung, gefolgt von rückfördernden Elementen mit einer Länge von 12 mm, einer Förderzone von 48 mm mit Elementen einer Steigung von 48 mm, in der das HDI dosiert wurde, gefolgt von einer Knetzone von 144 mm, einer Förderzone von 32 mm mit Elementen der Steigung 16 mm, eine Zone mit 24 mm Länge mit Förderelementen der Steigung 24 mm, einer Knetzone von 24 mm, einer Förderzone von 248 mm mit Elementen von 16 und 24 mm Steigung, eine Zone mit rückfördernden Elementen von 12 mm Länge, eine Zone mit Förderelementen mit einer Länge von 132 mm mit einer Entgasung und einer Zone von 120 mm Länge mit Förderelementen der Steigung 24 mm als Druckaufbauzone vor der Düse.

Extruderkonfiguration für das erfinderische Beispiel 4:

Eine Dosierung mit Entgasung, gefolgt von rückfördernden Elementen mit einer Länge von 12 mm, einer Förderzone von 48 mm mit Elementen einer Steigung von 48 mm, in der das HDI dosiert wurde, gefolgt von einer Knetzone von 144 mm, einer Förderzone von 12 mm mit einem Element der Steigung 12 mm, eine Zone mit 24 mm Länge mit Förderelementen der Steigung 24 mm, eine Knetzone von 24 mm, eine Zone mit Förderelementen mit einer Steigung von 12 mm von 228 mm Länge, eine Zone mit 24 mm Länge mit Förderelementen der Steigung 24 mm, eine Zone mit rückfördernden Elementen von 12 mm Länge, eine Zone mit Förderelementen mit einer Länge von 132 mm und Steigungen von 48 mm und 24 mm mit einer Entgasung und einer Zone von 120 mm Länge mit Förderelementen der Steigung 24 mm als Druckaufbauzone vor der Düse.

Extruderkonfiguration für das erfinderische Beispiel 5:

Eine Dosierung mit Entgasung, gefolgt von einem rückfördernden Element mit einer Länge von 12 mm, einer Förderzone von 48 mm mit Elementen einer Steigung von 48 mm, in der das HDI dosiert wurde, gefolgt von einer Knetzone von 96 mm, einer Förderzone von 312 mm Länge mit einer Steigung von 12 mm, eine Zone von 72 mm Länge mit Förderelementen der Steigung 24 mm, eine Zone mit rückfördernden Elementen mit einer Länge von 12 mm der Steigung 12 mm, eine Förderzone mit einer Länge von 120 mm und Elementen mit 48 mm Steigung mit Entgasung und eine Zone mit Förderelementen der Steigung 24 mm mit einer Länge von 144 mm als Druckaufbauzone vor der Düse.

**Tabelle 1:** Stoffströme, die zur Herstellung der erfindungsgemäßen Beispiele verwendet wurden.

|  | erfinderisches Beispiel 1 | erfinderisches Beispiel 2 | erfinderisches Beispiel 3 | erfinderisches Beispiel 4 | erfinderisches Beispiel 5 |
|---|---|---|---|---|---|
| Strom A [kg/h] | 2,91 | 5,97 | 5,97 | 2,91 | 2,91 |
| Strom B [kg/h] | 2,00 | 4,00 | 4,00 | 2,00 | 2,00 |
| Strom J [kg/h] | 0,78 | 1,34 | 1,27 | 0,78 | 0,78 |

**Tabelle 2:** Eigenschaften der beschriebenen Polymere

| | Vergleichsbeispiel 1 | Vergleichsbeispiel 2 | erfinderisches Beispiel 1 | erfinderisches Beispiel 2 | erfinderisches Beispiel 3 | erfinderisches Beispiel 4 | erfinderisches Beispiel 5 |
|---|---|---|---|---|---|---|---|
| max. Biegespannung [MPa] | 70,9 | 70,6 | 79,1 | 76,2 | 73,9 | 74,1 | 73,1 |
| $\overline{M}_z$ [g/mol] | 978 516 | 88 513 | 283 642 | 181920 | 150 116 | 129689 | 754 231 |
| $\overline{M}_{peak}$ [g/mol] | 39 355 | 32 734 | 44 668 | 25 409 | 24 831 | 37 153 | 65 313 |
| $\overline{M}_z/\overline{M}_{peak}$ | 24,9 | 2,7 | 6,4 | 7,2 | 6,1 | 3,5 | 11,6 |
| Tg [°C] | 27 | 28 | 30 | 27 | 25 | 26 | 27 |
| Tm [°C] | 181 | 185 | 188 | 185 | 184 | 186 | 182 |

EP 4 077 441 B1

**EP 4 077 441 B1**

Tabelle 2 zeigt, dass die beiden im Stand der Technik berichteten Produkte entweder ein sehr großes Verhältnis $\overline{M}_z/\overline{M}_{peak}$ (Vergleichsbeispiel 1) oder eine kleines Verhältnis $\overline{M}_z/\overline{M}_{peak}$ (Vergleichsbeispiel 2) zeigen. Die an diesen Beispielen bestimmten Biegespannungen liegen bei ca. 71 MPa.

Dagegen weisen die erfindungsgemäßen Beispiele einen Quotienten von $\overline{M}_z/\overline{M}_{peak}$ im beanspruchten Bereich von 3-15 auf und zeichnen sich durch signifikant höhere Biegespannungen von 73 MPa bis zu 79 MPa auf.

**Patentansprüche**

1. Thermoplastisches Polyurethanpolymer erhältlich durch die Umsetzung von mindestens folgenden Aufbaukomponenten:

   A) einem oder mehreren aliphatischen Diisocyanaten mit einem Molekulargewicht von 140 g/mol bis 170 g/mol und
   B) einem oder mehreren aliphatischen Diolen mit einem Molekulargewicht von 62 g/mol bis 120 g/mol,

   die zur Erzeugung des thermoplastischen Polyurethanpolymers eingesetzten Aufbaukomponenten zu mindestens 95 Gew.-% aus einem oder mehreren aliphatischen Diisocyanaten A) und einem oder mehreren aliphatischen Diolen B), bezogen auf die Gesamtmasse der eingesetzten Aufbaukomponenten, bestehen, wobei die einen oder mehreren aliphatischen Diisocyanate A) und die einen oder mehreren aliphatischen Diole B) in einem molaren Verhältnis im Bereich von 1,0 : 0,95 bis 0,95 : 1,0 eingesetzt werden, **dadurch gekennzeichnet, dass** das Verhältnis $\overline{M}_z/\overline{M}_{peak}$ des thermoplastischen Polyurethans in einem Bereich von 3 bis 15 liegt, wobei $\overline{M}_z$ das Zentrifugenmittel der Molmasse und $\overline{M}_{peak}$ die Molmasse des Maximums der Gelpermeationschromatographie-Kurve ist, jeweils bestimmt durch Gelpermeationschromatographie in Hexafluoroisopropanol gegen Polymethylmethacrylat als Standard.

2. Thermoplastisches Polyurethanpolymer nach Anspruch 1, **dadurch gekennzeichnet, dass** das Verhältnis $\overline{M}_z/\overline{M}_{peak}$ des thermoplastischen Polyurethans in einem Bereich von 3 bis 14, vorzugsweise in einem Bereich von 3,5 bis 14, besonders bevorzugt in einem Bereich von 3,5 bis 13, noch bevorzugter in einem Bereich von 3,5 bis 12,5, noch mehr bevorzugt in einem Bereich von 3,5 bis 12 liegt.

3. Thermoplastisches Polyurethanpolymer nach einem der vorhergehenden Ansprüche, **dadurch gekennzeichnet, dass** das $\overline{M}_z$ des thermoplastischen Polyurethans in einem Bereich von 100000 g/mol bis 900000 g/mol, vorzugsweise in einem Bereich von 110000 g/mol bis 850000 g/mol, besonders bevorzugt in einem Bereich von 120000 g/mol bis 800000 g/mol, noch bevorzugter in einem Bereich von 125000 g/mol bis 770000 g/mol liegt, bestimmt durch Gelpermeationschromatographie in Hexafluoroisopropanol gegen Polymethylmethacrylat als Standard und/oder dass das thermoplastische Polyurethanpolymer zu mindestens 96 Gew.-%, vorzugsweise zu mindestens 97 Gew.-%, besonders bevorzugt zu mindestens 98 Gew.-%, noch bevorzugter zu mindestens 99 Gew.-%, noch mehr bevorzugter zu mindestens 99,5 Gew.-% und am bevorzugtesten zu mindestens 99,9 Gew.-% aus einem oder mehreren aliphatischen Diisocyanaten A) und einem oder mehreren aliphatischen Diolen B) bezogen auf die Gesamtmasse des Polyurethanpolymers, besteht.

4. Thermoplastisches Polyurethanpolymer nach einem der vorhergehenden Ansprüche, **dadurch gekennzeichnet, dass** das eine oder die mehreren aliphatischen Diisocyanate A) ausgewählt sind aus der Gruppe bestehend aus 1,4-Diisocyanatobutan, 1,5-Diisocyanatopentan, 1,6-Diisocyanatohexan, 2-Methyl-1,5-diisocyanatopentan und / oder Mischungen aus mindestens zwei hieraus, vorzugsweise 1,5-Diisocyanatopentan und / oder 1,6-Diisocyanatohexan.

5. Thermoplastisches Polyurethanpolymer nach einem der vorhergehenden Ansprüche, **dadurch gekennzeichnet, dass** das eine oder die mehreren aliphatischen Diole B) ausgewählt sind aus der Gruppe bestehend aus 1,2-Ethandiol, 1,2-Propandiol, 1,3-Propandiol, 1,2-Butandiol, 1,3-Butandiol, 1,4-Butandiol, 1,5-Pentandiol, 1,6-Hexandiol und / oder Mischungen aus mindestens zwei hieraus, vorzugsweise 1,3-Propandiol, 1,4-Butandiol, 1,6-Hexandiol und / oder Mischungen aus mindestens zwei hieraus.

6. Thermoplastisches Polyurethanpolymer nach einem der vorhergehenden Ansprüche, **dadurch gekennzeichnet, dass** das thermoplastische Polyurethanpolymer einen Urethangruppengehalt von 40 Gew.-% bis 60 Gew.-%, vorzugsweise von 40 Gew.-% bis 52 Gew.-% aufweist, bezogen auf das Gesamtgewicht des thermoplastischen Polyurethanpolymers und/oder dass das thermoplastische Polyurethanpolymer ein mittels Elementaranalyse bestimmtes Gewichtsprozent-Verhältnis von O zu N von ≥ 1,5:1 bis ≤ 2,6:1 und ein mittels Elementaranalyse bestimmtes Gewichtsprozentverhältnis N zu C von ≥ 1:10 bis ≤ 1:3 aufweist.

7. Thermoplastisches Polyurethanpolymer nach einem der vorhergehenden Ansprüche, **dadurch gekennzeichnet, dass** das thermoplastische Polyurethanpolymer ein semikristallines thermoplastisches Polyurethanpolymer ist und/oder dass das thermoplastische Polyurethan einen Glasübergangspunkt von < 50 °C, vorzugsweise im Bereich zwischen ≥ 0° C und < 50 °C aufweist, bestimmt mit Differential Scanning Calorimetry gemäß DIN EN 61006 (November 2004).

8. Thermoplastisches Polyurethanpolymer nach einem der vorhergehenden Ansprüche, **dadurch gekennzeichnet, dass** das thermoplastische Polyurethanpolymer einen Schmelzpunkt von > 150 °C aufweist bestimmt mit Differential Scanning Calorimetry gemäß DIN EN 61006 (November 2004) und/ oder dass zwischen dem Glasübergangspunkt, bestimmt mit Differential Scanning Calorimetry gemäß DIN EN 61006 (November 2004), und dem Schmelzpunkt, bestimmt mit Differential Scanning Calorimetry gemäß DIN EN 61006 (November 2004), des thermoplastischen Polyurethans mindestens 100 °C liegen.

9. Thermoplastisches Polyurethanpolymer nach einem der vorhergehenden Ansprüche, **dadurch gekennzeichnet, dass** die zur Erzeugung des thermoplastischen Polyurethanpolymers eingesetzten Aufbaukomponenten zu 95 Gew.-% bis 99,9 Gew.-% aus einem oder mehreren aliphatischen Diisocyanaten A) und einem oder mehreren aliphatischen Diolen B) und zu 0,1 Gew.-% bis 5 Gew.-% aus einem oder mehreren Polyisocyanaten C) und / oder einer oder mehreren NCOreaktiven Verbindungen D) bestehen, bezogen auf die Gesamtmasse der eingesetzten Aufbaukomponenten.

10. Verfahren zur Herstellung eines thermoplastischen Polyurethanpolymers nach einem der vorhergehenden Ansprüche, **dadurch gekennzeichnet, dass** in einem ersten Schritt zumindest ein oder mehrere aliphatische Diisocyanate A) mit einem Molekulargewicht von 140 g/mol bis 170 g/mol mit ein oder mehreren aliphatischen Diolen B) mit einem Molekulargewicht von 62 g/mol bis 120 g/mol zu mindestens einem Prepolymer umgesetzt werden, vorzugsweise zu mindestens einem Hydroxy-terminierten Prepolymer, und das im ersten Schritt erhaltene mindestens eine Prepolymer in einem zweiten Schritt mit mindestens einem Kettenverlängerer, vorzugsweise mindestens einem Diisocyanat, zum thermoplastischen Polyurethanpolymer umgesetzt wird.

11. Zusammensetzung, **dadurch gekennzeichnet, dass** sie mindestens ein thermoplastisches Polyurethanpolymer nach einem der Ansprüche 1-9 und mindestens ein Additiv und / oder ein weiteres thermoplastisches Polymer umfasst.

12. Thermoplastische Formmasse, **dadurch gekennzeichnet, dass** sie mindestens eine Zusammensetzung nach Anspruch 11 umfasst.

13. Formkörper, Folie und / oder Faser **dadurch gekennzeichnet, dass** der Formkörper, die Folie oder die Faser mindestens ein thermoplastisches Polyurethanpolymer nach einem der Ansprüche 1-9, mindestens eine thermoplastische Formmasse nach Anspruch 12 oder mindestens eine Zusammensetzung nach Anspruch 11 umfasst.

14. Verwendung eines thermoplastischen Polyurethanpolymers nach einem der Ansprüche 1-9, einer thermoplastischen Formmasse nach Anspruch 12 oder einer Zusammensetzung nach Anspruch 11 zur Herstellung eines Formkörpers, einer Folie und / oder einer Faser.

15. Verwendung eines thermoplastischen Polyurethanpolymers nach einem der Ansprüche 1-9 zur Herstellung einer Zusammensetzung oder einer thermoplastischen Formmasse.

**Claims**

1. Thermoplastic polyurethane polymer obtainable by the reaction of at least the following formation components:

   A) one or more aliphatic diisocyanates having a molecular weight of 140 g/mol to 170 g/mol and
   B) one or more aliphatic diols having a molecular weight of 62 g/mol to 120 g/mol,

the formation components used to produce the thermoplastic polyurethane polymer consist to an extent of at least 95% by weight of one or more aliphatic diisocyanates A) and one or more aliphatic diols B), based on the total mass of the formation components used, where the one or more aliphatic diisocyanates A) and the one or more aliphatic diols B) are used in a molar ratio in the range from 1.0:0.95 to 0.95:1.0, **characterized in that** the $\overline{M}_z/\overline{M}_{peak}$ ratio of the thermoplastic polyurethane is within a range from 3 to 15, where $\overline{M}_z$ is the centrifuge-average molar mass and $\overline{M}_{peak}$ is the molar mass of the maximum of the gel permeation chromatography curve, each determined by gel permeation chromatography in hexafluoroisopropanol against polymethylmethacrylate as standard.

2.  Thermoplastic polyurethane polymer according to Claim 1, **characterized in that** the $\overline{M}_z/\overline{M}_{peak}$ ratio of the thermoplastic polyurethane is within a range from 3 to 14, preferably within a range from 3.5 to 14, more preferably within a range from 3.5 to 13, even more preferably within a range from 3.5 to 12.5, even more preferably still within a range from 3.5 to 12.

3.  Thermoplastic polyurethane polymer according to either of the preceding claims, **characterized in that** the $\overline{M}_z$ of the thermoplastic polyurethane is within a range from 100 000 g/mol to 900 000 g/mol, preferably within a range from 110 000 g/mol to 850 000 g/mol, more preferably within a range from 120 000 g/mol to 800 000 g/mol, even more preferably within a range from 125 000 g/mol to 770 000 g/mol, determined by gel permeation chromatography in hexafluoroisopropanol against polymethylmethacrylate as standard, and/or **in that** the thermoplastic polyurethane polymer consists to an extent of at least 96% by weight, preferably to an extent of at least 97% by weight, more preferably to an extent of at least 98% by weight, even more preferably to an extent of at least 99% by weight, even more preferably still to an extent of at least 99.5% by weight and most preferably to an extent of at least 99.9% by weight of one or more aliphatic diisocyanates A) and one or more aliphatic diols B), based on the total mass of the polyurethane polymer.

4.  Thermoplastic polyurethane polymer according to any of the preceding claims, **characterized in that** the one or more aliphatic diisocyanates A) are selected from the group consisting of 1,4-diisocyanatobutane, 1,5-diisocyanatopentane, 1,6-diisocyanatohexane, 2-methyl-1,5-diisocyanatopentane and/or mixtures of at least two of these, preferably 1,5-diisocyanatopentane and/or 1,6-diisocyanatohexane.

5.  Thermoplastic polyurethane polymer according to any of the preceding claims, **characterized in that** the one or more aliphatic diols B) are selected from the group consisting of ethane-1,2-diol, propane-1,2-diol, propane-1,3-diol, butane-1,2-diol, butane-1,3-diol, butane-1,4-diol, pentane-1,5-diol, hexane-1,6-diol and/or mixtures of at least two of these, preferably propane-1,3-diol, butane-1,4-diol, hexane-1,6-diol and/or mixtures of at least two of these.

6.  Thermoplastic polyurethane polymer according to any of the preceding claims, **characterized in that** the thermoplastic polyurethane polymer has a urethane group content of 40% by weight to 60% by weight, preferably of 40% by weight to 52% by weight, based on the total weight of the thermoplastic polyurethane polymer, and/or **in that** the thermoplastic polyurethane polymer has a per cent by weight ratio of O to N determined by means of elemental analysis of $\geq 1.5{:}1$ to $\leq 2.6{:}1$ and a per cent by weight ratio of N to C determined by means of elemental analysis of $\geq 1{:}10$ to $\leq 1{:}3$.

7.  Thermoplastic polyurethane polymer according to any of the preceding claims, **characterized in that** the thermoplastic polyurethane polymer is a semicrystalline thermoplastic polyurethane polymer, and/or **in that** the thermoplastic polyurethane has a glass transition point of < 50°C, preferably in the range between $\geq 0$°C and < 50°C, determined by differential scanning calorimetry to DIN EN 61006 (November 2004).

8.  Thermoplastic polyurethane polymer according to any of the preceding claims, **characterized in that** the thermoplastic polyurethane polymer has a melting point of > 150°C, determined by differential scanning calorimetry to DIN EN 61006 (November 2004), and/or **in that** there is at least 100°C between the glass transition point determined by differential scanning calorimetry to DIN EN 61006 (November 2004) and the melting point determined by differential scanning calorimetry to DIN EN 61006 (November 2004) of the thermoplastic polyurethane.

9.  Thermoplastic polyurethane polymer according to any of the preceding claims, **characterized in that** the formation components used to produce the thermoplastic polyurethane polymer consist to an extent of 95% by weight to 99.9% by weight of one or more aliphatic diisocyanates A) and one or more aliphatic diols B) and to an extent of 0.1% by weight to 5% by weight of one or more polyisocyanates C) and/or one or more NCO-reactive compounds D), based on the total mass of the formation components used.

**10.** Process for preparing a thermoplastic polyurethane polymer according to any of the preceding claims, **characterized in that**, in a first step, at least one or more than one aliphatic diisocyanate A) having a molecular weight of 140 g/mol to 170 g/mol is reacted with one or more aliphatic diols B) having a molecular weight of 62 g/mol to 120 g/mol to give at least one prepolymer, preferably to give at least one hydroxy-terminated prepolymer, and the at least one prepolymer obtained in the first step is reacted in a second step with at least one chain extender, preferably at least one diisocyanate, to give the thermoplastic polyurethane polymer.

**11.** Composition, **characterized in that** it comprises at least one thermoplastic polyurethane polymer according to any of Claims 1-9 and at least one additive and/or a further thermoplastic polymer.

**12.** Thermoplastic moulding compound, **characterized in that** it comprises at least one composition according to Claim 11.

**13.** Moulding, film and/or fibre, **characterized in that** the moulding, film or fibre comprises at least one thermoplastic polyurethane polymer according to any of Claims 1-9, at least one thermoplastic moulding compound according to Claim 12 or at least one composition according to Claim 11.

**14.** Use of a thermoplastic polyurethane polymer according to any of Claims 1-9, a thermoplastic moulding compound according to Claim 12 or a composition according to Claim 11 for production of a moulding, film and/or fibre.

**15.** Use of a thermoplastic polyurethane polymer according to any of Claims 1-9 for production of a composition or a thermoplastic moulding compound.

**Revendications**

**1.** Polymère de polyuréthane thermoplastique pouvant être obtenu par la réaction d'au moins les constituants suivants :

A) un ou plusieurs diisocyanates aliphatiques ayant une masse moléculaire de 140 g/mol à 170 g/mol et
B) un ou plusieurs diols aliphatiques ayant une masse moléculaire de 62 g/mol à 120 g/mol,

les constituants utilisés pour la production du polymère de polyuréthane thermoplastique étant constitués à raison d'au moins 95 % en poids d'un ou plusieurs diisocyanates aliphatiques A) et d'un ou plusieurs diols aliphatiques B), par rapport à la masse totale des constituants utilisés, le ou les diisocyanates aliphatiques A) et le ou les diols aliphatiques B) étant utilisés selon un rapport en moles dans la plage de 1,0:0,95 à 0,95:1,0, **caractérisé en ce que** le rapport $\overline{M}_z/\overline{M}_{pic}$ du polyuréthane thermoplastique est compris dans la plage de 3 à 15, $\overline{M}_z$ étant la moyenne, obtenue par centrifugation, de la masse moléculaire et $\overline{M}_{pic}$ étant la masse moléculaire du maximum de la courbe de chromatographie par perméation de gel, dans chaque cas déterminée par chromatographie par perméation de gel dans de l'hexafluoroisopropanol, contre du poly(méthacrylate de méthyle) en tant qu'étalon.

**2.** Polymère de polyuréthane thermoplastique selon la revendication 1, **caractérisé en ce que** le rapport $\overline{M}_z/\overline{M}_{pic}$ du polyuréthane thermoplastique est compris dans la plage de 3 à 14, de préférence dans la plage de 3,5 à 14, d'une manière particulièrement préférée dans la plage de 3,5 à 13, d'une manière encore plus préférée dans la plage de 3,5 à 12,5, tout spécialement dans la plage de 3,5 à 12.

**3.** Polymère de polyuréthane thermoplastique selon l'une des revendications précédentes, **caractérisé en ce que** la $\overline{M}_z$ du polyuréthane thermoplastique est comprise dans la plage de 100 000 g/mol à 900 000 g/mol, de préférence dans la plage de 110 000 g/mol à 850 000 g/mol, d'une manière particulièrement préférée dans la plage de 120 000 g/mol à 800 000 g/mol, encore plus préférentiellement dans la plage de 125 000 g/mol à 770 000 g/mol, déterminée par chromatographie par perméation de gel dans de l'hexafluoroisopropanol contre du poly(méthacrylate de méthyle) en tant qu'étalon, et/ou que le polymère de polyuréthane thermoplastique est à raison d'au moins 96 % en poids, de préférence d'au moins 97 % en poids, d'une manière particulièrement préférée d'au moins 98 % en poids, encore plus préférentiellement d'au moins 99 % en poids, tout spécialement d'au moins 99,5 % en poids, et idéalement d'au moins 99,9 % en poids, constitué d'un ou plusieurs diisocyanates aliphatiques A) et d'un ou plusieurs diols aliphatiques B), par rapport à la masse totale du polymère de polyuréthane.

**4.** Polymère de polyuréthane thermoplastique selon l'une des revendications précédentes, **caractérisé en ce que** le ou les diisocyanates aliphatiques A) sont choisis dans le groupe consistant en le 1,4-diisocyanatobutane, le 1,5-diisocyanatopentane, le 1,6-diisocyanatohexane, le 2-méthyl-1,5-diisocyanatopentane et/ou les mélanges d'au moins deux d'entre eux, de préférence le 1,5-diisocyanatopentane et/ou le 1,6-diisocyanatohexane.

5.  Polymère de polyuréthane thermoplastique selon l'une des revendications précédentes, **caractérisé en ce que** le ou les diols aliphatiques B) sont choisis dans le groupe consistant en le 1,2-éthanediol, le 1,2-propanediol, le 1,3-propanediol, le 1,2-butanediol, le 1,3-butanediol, le 1,4-butanediol, le 1,5-pentanediol, le 1,6-hexanediol et/ou les mélanges d'au moins deux d'entre eux, de préférence le 1,3-propanediol, le 1,4-butanediol, le 1,6-hexanediol et/ou les mélanges d'au moins deux d'entre eux.

6.  Polymère de polyuréthane thermoplastique selon l'une des revendications précédentes, **caractérisé en ce que** le polymère de polyuréthane thermoplastique présente une teneur en groupes uréthane de 40 % en poids à 60 % en poids, de préférence de 40 % en poids à 52 % en poids, par rapport au poids total du polymère de polyuréthane thermoplastique et/ou que le polymère de polyuréthane thermoplastique présente un rapport en pourcentage en poids de O à N, déterminé par analyse élémentaire, de $\geq 1,5{:}1$ à $\leq 2,6{:}1$ et un rapport en pourcentage en poids de N à C, déterminé par analyse élémentaire, de $\geq 1{:}10$ à $\leq 1{:}3$.

7.  Polymère de polyuréthane thermoplastique selon l'une des revendications précédentes, **caractérisé en ce que** le polymère de polyuréthane thermoplastique est un polymère de polyuréthane thermoplastique semi-cristallin et/ou que le polyuréthane thermoplastique présente une température de transition vitreuse < 50 °C, de préférence dans la plage entre $\geq 0$ °C et < 50 °C, déterminée par analyse calorimétrique différentielle selon DIN EN 61006 (novembre 2004).

8.  Polymère de polyuréthane thermoplastique selon l'une des revendications précédentes, **caractérisé en ce que** le polymère de polyuréthane thermoplastique présente un point de fusion > 150 °C, déterminé par analyse calorimétrique différentielle selon DIN EN 61006 (novembre 2004) et/ou qu'entre la température de transition vitreuse déterminée par analyse calorimétrique différentielle selon DIN EN 61006 (novembre 2004) et le point de fusion déterminé par analyse calorimétrique différentielle selon DIN EN 61006 (novembre 2004) du polyuréthane thermoplastique, il y a une différence d'au moins 100 °C.

9.  Polymère de polyuréthane thermoplastique selon l'une des revendications précédentes, **caractérisé en ce que** les constituants utilisés pour la production du polymère de polyuréthane thermoplastique sont, à raison de 95 % en poids à 99,9 % en poids, constitués d'un ou plusieurs diisocyanates aliphatiques A) et d'un ou plusieurs diols aliphatiques B) et à raison de 0,1 % en poids à 5 % en poids d'un ou plusieurs polyisocyanates C) et/ou d'un ou plusieurs composés D) réactifs vis-à-vis de NCO, par rapport à la masse totale des constituants utilisés.

10. Procédé de fabrication d'un polymère de polyuréthane thermoplastique selon l'une des revendications précédentes, **caractérisé en ce que**, dans une première étape, on fait réagir au moins un ou plusieurs diisocyanates aliphatiques A) ayant une masse moléculaire de 140 g/mol à 170 g/mol avec un ou plusieurs diols aliphatiques B) ayant une masse moléculaire de 62 g/mol à 120 g/mol pour obtenir un prépolymère, de préférence au moins un polymère à terminaison hydroxy, et l'au moins un prépolymère obtenu dans la première étape est, dans une deuxième étape, mis à réagir avec au moins un prolongateur de chaîne, de préférence au moins un diisocyanate, pour obtenir le polymère de polyuréthane thermoplastique.

11. Composition, **caractérisée en ce qu'**elle comprend au moins un polymère de polyuréthane thermoplastique selon l'une des revendications 1 à 9 et au moins un additif et/ou un autre polymère thermoplastique.

12. Mélange à mouler thermoplastique, **caractérisé en ce qu'**il comprend au moins une composition selon la revendication 11.

13. Objet moulé, feuille et/ou fibre, **caractérisés en ce que** l'objet moulé, la feuille ou la fibre comprend au moins un polymère de polyuréthane thermoplastique selon l'une des revendications 1 à 9, au moins un mélange à mouler thermoplastique selon la revendication 12 ou au moins une composition selon la revendication 11.

14. Utilisation d'un polymère de polyuréthane thermoplastique selon l'une des revendications 1 à 9, d'un mélange à mouler thermoplastique selon la revendication 12 ou d'une composition selon la revendication 11 pour la fabrication d'un objet moulé, d'une feuille et/ou d'une fibre.

**15.** Utilisation d'un polymère de polyuréthane thermoplastique selon l'une des revendications 1 à 9 pour la fabrication d'une composition ou d'un mélange à mouler thermoplastique.

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 728981
- EP 0403921 B
- DE 2901774 A

**In der Beschreibung aufgeführte Nicht-Patentliteratur**

- **G. OERTEL.** Kunststoff-Handbuch. 1993, vol. 7, 12
- **O. BAYER.** *Angew. Chem.,* 1947, vol. 59, 257-288
- **V. V. KORSHAK.** *Soviet Plastics,* 1961, vol. 7, 12-15
- Makromolekulare Stoffe. **HOUBEN-WEYL.** Methoden der organischen Chemie. Georg Thieme Verlag, 1987, vol. E20, 1587-1593
- Justus Liebigs Annalen der Chemie. 1949, vol. 562, 75-136
- Polyurethane. **J.H. SAUNDERS ; K.C. FRISCH.** High Polymers. Verlag Interscience Publishers, 1962, vol. XVI
- **R. GÄCHTER ; H. MÜLLER.** Taschenbuch für Kunststoff-Additive. Hanser Verlag, 1990